(19) Europäisches Patentamt / European Patent Office / Office européen des brevets

(11) **EP 3 359 372 B1**

(12) **EUROPÄISCHE PATENTSCHRIFT**

(45) Veröffentlichungstag und Bekanntmachung des Hinweises auf die Patenterteilung:
**05.06.2019   Patentblatt 2019/23**

(21) Anmeldenummer: **16722077.1**

(22) Anmeldetag: **22.04.2016**

(51) Int Cl.:
*B29C 64/386* (2017.01)          *B29C 64/112* (2017.01)
*B29C 64/106* (2017.01)

(86) Internationale Anmeldenummer:
**PCT/EP2016/059094**

(87) Internationale Veröffentlichungsnummer:
**WO 2017/108208 (29.06.2017 Gazette 2017/26)**

(54) **3D-DRUCKVORRICHTUNG UND VERFAHREN ZUR HERSTELLUNG EINES OBJEKTS UNTER EINSATZ EINER 3D-DRUCKVORRICHTUNG**

3D-PRINTING DEVICE AND PROCESS FOR PRODUCING AN OBJECT WITH USE OF A 3D-PRINTING DEVICE

DISPOSITIF D'IMPRESSION 3D ET PROCÉDÉ DE FABRICATION D'UN OBJET À L'AIDE D'UN DISPOSITIF D'IMPRESSION 3D

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2015   PCT/EP2015/080742**

(43) Veröffentlichungstag der Anmeldung:
**15.08.2018   Patentblatt 2018/33**

(73) Patentinhaber: **Wacker Chemie AG**
**81737 München (DE)**

(72) Erfinder:
• **ELLER, Klaus**
**84489 Burghausen (DE)**

• **PETER, Maximilian**
**84503 Altötting (DE)**

(74) Vertreter: **Bitterlich, Bianca et al**
**Wacker Chemie AG**
**Intellectual Property**
**Hanns-Seidel-Platz 4**
**81737 München (DE)**

(56) Entgegenhaltungen:
| | |
|---|---|
| EP-A1- 2 783 837 | WO-A1-02/098576 |
| WO-A1-2015/044372 | US-A- 5 303 141 |
| US-A1- 2004 231 594 | US-A1- 2006 061 613 |
| US-A1- 2015 343 688 | US-B1- 9 079 441 |

EP 3 359 372 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung eines Objekts unter Einsatz einer 3D-Druckvorrichtung, die zumindest einen Druckkopf mit zumindest einer Austragevorrichtung aufweist, wobei die Austragevorrichtung dazu eingerichtet ist, Druckmassen an Soll-Positionen zu setzen, um das Objekt generativ zu erzeugen. Weitere Aspekte der Erfindung betreffen eine 3D-Druckvorrichtung, welche zur Durchführung des Verfahrens eingerichtet ist.

**Stand der Technik**

Zur Herstellung von Prototypen, Kleinserien oder Einzelstücken eines Gegenstands sind aus dem Stand der Technik eine Vielzahl verschiedener generativer Fertigungsverfahren bekannt. Diese auch als 3D-Druck bezeichneten Verfahren haben gemeinsam, dass eine Fertigung eines Gegenstands bzw. Objekts direkt auf Basis eines Computermodells erfolgt. Vorteilhaft lassen sich so kostengünstig und einfach kundenspezifische Bauteile anfertigen. Zur Herstellung eines Objekts wird beispielsweise ein Pulver durch Aufbringen eines Härters selektiv verfestigt, wobei der Härter in einem vom herzustellenden Objekt abhängigen Muster auf das Pulver aufgetragen wird. Weitere Verfahren umfassen das Lasersintern, bei dem nach einem vorgegebenen Muster Pulver durch Aufschmelzen mit einem Laser in der gewünschten Form verfestigt wird, sowie Fused Filament Fabrication, bei dem ein Objekt schichtweise aus einem schmelzfähigen Kunststoff hergestellt wird. Ebenfalls bekannt sind Verfahren, bei denen Flüssigkeit tröpfchenweise mit Düsen abgegeben und beispielsweise durch Einwirkung von UV-Strahlung ausgehärtet wird.

DE 10 2011 106 614 A1 offenbart ein Verfahren und eine Vorrichtung zur Herstellung eines dreidimensionalen Gegenstands, wobei der Gegenstand aus einem verfestigbaren Material wie Silikon aufgebaut wird, welches entweder im Ausgangszustand in flüssiger Phase vorliegt oder verflüssigt werden kann. Das flüssige Material wird in Form von Tropfen ausgetragen und auf einem Objektträger platziert. Mittels variabler Ausrichtung, Positionierung und Neigung eines Drucktisches oder des Objektträgers werden spezielle 3D-Drucke von Überhängen und freitragenden Elementen durchgeführt. Dabei wird das zu druckende Objekt durch mehrachsige Aktoren so ausgerichtet, dass die Druckeinrichtung die Druckvoxel immer senkrecht auf der Druckebene platzieren kann.

DE 10 2012 000 664 A1 offenbart eine Vorrichtung zur Erzeugung von dreidimensionalen Objekten mit einem Träger und einem Extruder zur Abgabe eines Druckmaterials und mit einem Antriebssystem, wobei der Träger und der Extruder mittels des Antriebssystems in drei Bewegungsrichtungen relativ zueinander bewegbar sind, um das dreidimensionale Objekt zu erzeugen. Zur Verbesserung der Justierbarkeit sind in mindestens einer der Bewegungsrichtungen mehrere Antriebsmotoren vorgesehen.

In EP 1 886 793 A1 werden verschiedene Aspekte zur Beeinflussung der Tropfengröße und zur Beeinflussung der Flugbahn von Drucktropfen beschrieben. Weiterhin wird der Abstand der Druckdüse zur Druckebene so gewählt, dass sich eine optimale Ablösung der Drucktropfen ergibt.

DE 10 2013 003 167 A1 betrifft ein weiteres Verfahren zur Herstellung eines dreidimensionalen Gegenstands durch generativen Aufbau. Beim Ausbringen werden strukturell unterschiedliche Bereiche des Gegenstandes erzeugt, wobei beim Ausbringen in den verschiedenen Bereichen Raumstrukturen gemäß ausgewählter Gestaltungskriterien erzeugt werden.

DE 10 2015 110 342 A1 beschreibt ein noch weiteres Verfahren zum Druck leitfähiger Elemente an beliebigen Körpern. Zur Verbesserung der Genauigkeit der Tröpfchenplatzierung wird die Höhe des Abstands zwischen der Düsenspitze und dem Substrat optimiert.

WO 20157044372 A1 offenbart ein System umfassend ein Werkzeug zur Bereitstellung eines Strangs aus Druckmasse, eine optische Abtasteinrichtung zur Abtastung des Strangs, eine Verarbeitungseinrichtung zur Erkennung geometrischer Figuren in Abschnitten des abgetasteten Strangs und eine Umsetzungseinrichtung zur Bereitstellung geometrischer Konstruktionsdaten auf der Basis der erkannten Figuren. In einer Ausführungsform umfasst die Abtasteinrichtung ein optisches Positioniersystem mit zwei Kameras.

US 9 079 441 B1 offenbart einen 3D-Tintenstrahldrucker mit einem optischen Sensor zur Identifizierung von nicht-funktionierenden Düsen. In einer Ausführungsform ist der optische Sensor eine Digitalkamera.

Die aus dem Stand der Technik bekannten Geräte weisen jedoch technische Defizite auf, welche die Qualität der gedruckten Teile beeinflussen. Die mit den aus dem Stand der Technik bekannten generativen Verfahren erzielbare Qualität der Objekte erreicht nicht die konstante Qualität vergleichbarer, mittels Spritzguss hergestellter Objekte. Auch ist es mit den bekannten Verfahren nicht möglich, eine gleichbleibende Qualität des Endproduktes sicherzustellen, wie es für den industriellen Einsatz der hergestellten Objekte unabdingbar ist.

Störend sind vor allem Fehldrucke, die aufgrund von Veränderungen des Materialaustrags aus der Druckdüse entstehen, oder Fehldrucke, die Fehlstellen wie Lufteinschlüsse aufweisen. Derartige Lufteinschlüsse entstehen beispielsweise bei nicht gesetzten Druckmassen.

Eine Aufgabe der Erfindung ist ein verbessertes Verfahren zur generativen Fertigung von Objekten sowie eine entsprechende Vorrichtung bereitzustellen, mit dem Objekte hoher Qualität, z.B. in Bezug auf Oberfläche und Formtreue, herstellbar sind. Eine weitere Aufgabe der Erfindung ist es ein Verfahren bereitzustellen, mit dem sich eine gleichbleibende Qualität der hergestellten Objekte sicherstellen lässt.

**Offenbarung der Erfindung**

Es wird ein Verfahren zur Herstellung eines Objekts unter Einsatz einer 3D-Druckvorrichtung vorgeschlagen. Die 3D-Druckvorrichtung weist zumindest einen Druckkopf mit zumindest einer Austragevorrichtung auf, wobei die Austragevorrichtung dazu eingerichtet ist, Druckmassen an Soll-Positionen zu setzen, um das Objekt generativ zu erzeugen. Die Druckmasse kann Masse zur Erzeugung eines dauerhaften Bauteils sein, insbesondere Silikon, oder kann Masse sein, die für temporär erzeugte Teile oder Bereiche benötigt wird, insbesondere Stützmaterial in Form von z. B. Polyethylenglycol (PEG).

Die Austragevorrichtung ist eingerichtet, in Richtung der Austragsachse Druckmassen in Form einzelner isolierter Tropfen, als Tropfenreihe oder in Form eines Strangs abzugeben. Fließende Übergänge zwischen diesen Formen sind möglich. Im Rahmen dieser Beschreibung wird ein aus der Austragevorrichtung ausgetragener und auf der Basisplatte bzw. auf dem Objekt gesetzter Tropfen einer Druckmasse als Voxel bezeichnet. Mit Strang wird sowohl ausgetretene und noch nicht gesetzte, als auch gesetzte Druckmasse bezeichnet. Unter einer gesetzten Druckmasse wird sowohl ein Voxel als auch ein Strang verstanden. Erfindungsgemäß ist vorgesehen, dass aus der Austragevorrichtung austretende bzw. ausgetretene Druckmassen im Bereich der Austragevorrichtung detektiert und/oder geometrisch vermessen werden. Die Druckmassen werden im Bereich der Austragevorrichtung detektiert und/oder geometrisch vermessen, so dass die Messung Schlüsse auf den Zustand der Austragevorrichtung erlaubt. Das bedeutet, dass die Druckmassen detektiert und/oder geometrisch vermessen werden, während sie austreten, oder nachdem sie ausgetreten sind und bevor sie gesetzt sind. Im Falle von Tropfen bedeutet das, dass diese während des Fluges detektiert und/oder geometrisch vermessen werden. Die Messung der Druckmassen im Bereich der Austragevorrichtung kann durch weitere Messungen an den Druckmassen ergänzt werden, nachdem sie gesetzt wurden.

Als geometrische Vermessung wird dabei in weitem Sinne die Erlangung von Kenntnissen über die Form, bzw. Gestalt der ausgetretenen Druckmasse bezeichnet.

In einer Ausgestaltung des Verfahrens werden anhand der gemessenen Geometrie Druckfehler ermittelt. Beispielsweise kann ermittelt werden, ob überhaupt Druckmasse in Form eines Tropfes, einer Tropfenreihe oder eines Stranges ausgetreten ist. Insbesondere kann die Detektion und/oder geometrische Vermessung also die Bestimmung von fehlerhaft nicht-gesetzten Druckmassen ermöglichen. Fehlerhaft nicht gesetzte Druckmassen können beispielsweise auf einen Verschleiß von Druckstößeln oder auf ein Verstopfen der Austragevorrichtung hinweisen. Wird dies in einem nicht tolerierbaren Ausmaß festgestellt, kann beispielsweise vorgesehen sein, die Austragevorrichtung zu reinigen oder Wartungshinweise an den Benutzer auszugeben.

Weiterhin können die Tropfen, Tropfenreihen und Stränge durch Vermessung der Tropfenform, Tropfenreihenform oder Strangform genauer charakterisiert werden. Dabei kann beispielsweise der Durchmesser des Tropfenquerschnitts und des Stranges bestimmt werden. Weiterhin kann auch eine Volumenmessung des Tropfens erfolgen, wodurch bei bekannter Dichte der Druckmasse auch das Gewicht des Tropfens bestimmt werden kann. Weiterhin kann auch der Grad der Rotationssymmetrie des Tropfens oder Strangs bestimmt werden. Bei einem Tropfen kann die Abweichung von einer definierten Tropfengeometrie bestimmt werden. Bei einem Strang kann die Abweichung von einer definierten Stranggeometrie, z. B. von der Zylindergeometrie bestimmt werden. Dadurch kann beispielsweise auch eine falsche Austragehöhe oder eine falsche Verfahrgeschwindigkeit des Druckkopfes beim Drucken der Stränge festgestellt und korrigiert werden, welche zu einer Deformation des Ausgangsstranges aus der Austragevorrichtung führen.

Die geometrische Vermessung kann zusätzlich hierzu oder alternativ hierzu auch eine Bestimmung von ungewolltem Abrissverhalten der Druckmassen, insbesondere eine Bestimmung von Fadenzug umfassen. Beim Drucken von Voxeln ergibt sich kurz vor der Ablösung des Tropfens von der Austragevorrichtung eine Form, bei der der Tropfen auf der einen Seite nahezu kugelförmig ist, auf der anderen Seite aber spitz zuläuft. Nach der Ablösung kann die Spitze sich verkleinern oder ganz verschwinden. Unter gewissen Bedingungen, beispielsweise bei zu niedriger Edukttemperatur, anvernetztem Material oder unter suboptimalen Einstellungen der Austragevorrichtung, insbesondere bei falscher Stößelhubgeschwindigkeit, falscher Stößelrückzugsgeschwindigkeit, falschen Öffnungszeiten der Düse oder falschem Stößelhub, verschwindet die Spitze allerdings nicht, sondern erweitert sich zu einem Faden, der so ausgeprägt sein kann, dass er den Tropfen mit dem nachfolgenden Tropfen verbindet. Dieser Effekt wird als Fadenzug bezeichnet. Auch bei einem Strang kann Fadenzug vorliegen, zum Beispiel wenn Stränge von Schicht zu Schicht abgesetzt und neu begonnen werden. Wird Fadenzug in einem nicht tolerierbaren Ausmaß festgestellt, kann beispielsweise vorgesehen sein, die Austragevorrichtung zu reinigen.

Gemäß einer bevorzugten Ausführungsform wird außerdem das Gewicht der aus der Austragevorrichtung ausgetretenen Druckmassen gemessen. Während des Druckprozesses kann somit eine kontinuierliche Massenbilanz des gedruckten Objekts erstellt werden. Das mittels Volumen und Dichte bestimmte Gewicht des Druckmaterials kann mit dem gemessenen Gewicht verglichen werden. Somit ist eine Erkennung von etwaigem Fremdkörpereintrag in die Druckmasse während des Druckvorganges erreichbar. Fremdkörper können z.B. Schwebepartikel aus der Umgebung sein oder auch von fest gewordenen Silikonablagerungen oder von Kondenswasser in der Austragevorrichtung stammen.

Eine abweichende Geometrie oder eine fehlerhaft nicht-gesetzte Druckmasse können auf Probleme der Austragevorrichtung hinweisen, beispielsweise eine verstopfte Düse oder eine Luftblase in der Zuführung der Druckmasse zum Druckkopf. Anhand der Detektion oder gemessenen Geometrie der aus der Austragevorrichtung ausgetretenen Druckmassen wird daher gemäß einer Ausführungsform der Erfindung eine automatische Reinigung des Druckkopfes getriggert, d. h. ausgelöst. Die Reinigung dient der Qualitätssicherung, da nur bei einer sauberen Düse die angestrebte Voxel, bzw. Stranggeometrie sichergestellt ist. Die 3D-Druckvorrichtung umfasst hierzu eine Reinigungsstation, welche die automatische Reinigung ermöglicht.

Wird eine fehlerhaft nicht-gesetzte Druckmasse erkannt, so wird dies zusammen mit der Position, an der die Druckmasse gesetzt werden sollte, protokolliert. Gemäß einer Ausführungsform der Erfindung ist vorgesehen, die fehlerhaft nicht-gesetzten Druckmassen nachzudrucken. Hierdurch ist weniger Materialausschuss durch fehlerhaft gedruckte Objekte zu erwarten. Um die nicht-gesetzten Druckmassen nachzudrucken, wird der Druckkopf z. B. nach dessen Reinigung wieder an die protokollierte Position bewegt und der Austrag der Druckmasse wird wiederholt. Die fehlerhaft nicht-gesetzten Druckmassen können nachträglich auch durch gezielte Mehrdrucke in nachfolgenden Schichten gesetzt werden.

Bevorzugt erfolgt der Nachdruck der nicht-gesetzten Druckmassen vor einem Aushärteverfahrensschritt. Das Nachdrucken der nicht-gesetzten Druckmassen vor dem Aushärten hat den Vorteil, dass sich die nachgedruckten Druckmassen noch mit den nicht ausgehärteten Druckmassen verbinden können, z. B. mit den gesetzten benachbarten Druckmassen, wobei sich der Begriff "benachbart" z. B. auf Druckmassen derselben Schicht beziehen kann, bzw. je nach Aushärtestrategie auch auf Druckmassen mehrerer Schichten. Die verwendete Druckmasse ist nach dem Austrag hierzu noch fließfähig, so dass die gesetzten Druckmassen ineinander fließen können und ein glatter Übergang zwischen den gesetzten Druckmassen entsteht.

Alternativ oder zusätzlich zum Nachdrucken der nicht-gesetzten Druckmassen ist vorgesehen, Fehlermeldungen oder Warnmeldungen auszugeben. Die Alterung der Austragevorrichtung kann in Form von Fehlermeldungen protokolliert werden. Warnmeldungen können Wartungshinweise für den Benutzer umfassen, z. B. darauf hinweisen, dass eine Reinigung nötig ist.

Die Ergebnisse der Messung der Geometrie der ausgetretenen Druckmassen können einem Benutzer der 3D-Druckvorrichtung auch für andere Zwecke bereitgestellt werden, beispielsweise auf einem Bildschirm und/oder auf einem Datenträger. Somit wird der Benutzer in die Lage versetzt, auf jede Veränderung beim Austrag der Druckmasse adäquat reagieren zu können.

Einige auftretende erkannte Abweichungen von der Normgeometrie können durch automatische Korrekturen in der Gerätesteuerung kompensiert werden. Gemäß einer Ausführungsform des Verfahrens ist daher vorgesehen, dass das Druckergebnis, d. h. die gewünschte Geometrie der austretenden Druckmassen auf Basis der Messergebnisse automatisch geregelt wird. Im Rahmen der vorliegenden Offenbarung wird unter einer Regelung, dem üblichen Sprachgebrauch folgend, ein automatisches Verändern eines Betriebsparameters zur Erhaltung einer Messgröße verstanden, hier einer gleichbleibenden Geometrie. Vereinfacht kann das auch wie folgt beschrieben werden: Weicht die Geometrie zu stark ab, werden ein oder mehrere der im Folgenden genannten Parameter so lange nachjustiert, bis die Geometrie wieder wie gewünscht vorliegt. Ist dies nicht möglich, kann der 3D-Druckvorgang gestoppt werden. Letzteres wird insbesondere bei Veränderungen der Druckqualität aufgrund von Verschleiß an der Austragevorrichtung oder bei fehlerhafter oder fehlender Druckmasse der Fall sein.

Zu den Betriebsparametern der 3D-Druckvorrichtung, die in der Lage sind, die Geometrie der aus der Austragevorrichtung ausgetretenen Druckmassen zu beeinflussen, gehört die Verfahrgeschwindigkeit des Druckkopfes. Eine Erhöhung der Verfahrgeschwindigkeit des Druckkopfes kann bei Strängen zu einer Verringerung des Strangquerschnitts in Verfahrrichtung führen, eine Verringerung der Verfahrgeschwindigkeit des Druckkopfes entsprechend zu einer Vergrößerung des Strangquerschnitts in Verfahrrichtung.

Zu den Betriebsparametern der 3D-Druckvorrichtung, die in der Lage sind, die Geometrie der aus der Austragevorrichtung ausgetretenen Druckmassen zu beeinflussen, gehört außerdem die Austragehöhe oder Applikationshöhe über der Basisplatte, auf der das Objekt angeordnet wird. Eine Erhöhung der Austragehöhe über der Basisplatte kann bei Strängen zu ungenauer Positionierung und bei Voxeln zu Trajektorienfehlern führen, eine Verringerung der Austragehöhe über der Basisplatte bei Strängen zu Deformation in der Breite und bei Voxeln zu unsauberem Tropfenabrissverhalten bis zum Verkleben der Düse, sowie zu Fadenzugerscheinungen. Insbesondere ist das Eintauchen der Austragevorrichtung in die gesetzte Druckmasse in den meisten Fällen nicht erwünscht.

Zu den Betriebsparametern der 3D-Druckvorrichtung, die in der Lage sind, die Geometrie der aus der Austragevorrichtung ausgetretenen Druckmassen zu beeinflussen, gehören weiterhin auch der in der Austragevorrichtung vorherrschende physikalische Druck, mit dem die Druckmasse beaufschlagt ist. Der Begriff "physikalischer Druck" wird verwendet, um den Begriff von "drucken" zu unterscheiden. Eine Erhöhung des in der Austragevorrichtung vorherrschenden physikalischen Drucks führt bei Strängen und bei Voxeln zu einem erhöhten Materialaustrag. Eine Verringerung des in der Austragevorrichtung vorherrschenden physikalischen Drucks führt bei Strängen und bei Voxeln zu einer Verminderung des Materialaustrags.

Entsprechendes gilt für den physikalischen Vordruck im Materialspeicher.

Zu den Betriebsparametern der 3D-Druckvorrichtung, die in der Lage sind, die Geometrie der aus der Austragevorrichtung ausgetretenen Tropfen zu beeinflussen, gehört weiterhin die Druckfrequenz, bzw. Austragerate der Tropfen bzw. Voxel. Eine Erhöhung der Druckfrequenz kann zu einer Volumenverkleinerung führen, eine Verringerung der Druckfrequenz entsprechend zu einer Volumenvergrößerung. Die Druckfrequenz wird weiter bevorzugt in Kombination mit der Verfahrgeschwindigkeit des Druckkopfes angepasst.

Weitere Parameter der Jettingdüsen, die die Voxelgröße beeinflussen, sind die Stößelhubgeschwindikeit, Stößelrückzugsgeschwindikeit, Öffnungszeiten des Jettingventils und der Stößelhub. Die Regelung der Geometrie der aus der Austragevorrichtung ausgetretenen Druckmassen durch Änderung dieser Größen wird daher ebenfalls vorgeschlagen. Auch Stößelformen und Düsenkombination beeinflussen die Voxelgröße, jedoch lassen sich diese Parameter oftmals während des Drucks nicht ändern.

Weitere Parameter der Dispensers, die die Stranggröße und Druckgenauigkeit beeinflussen, sind die Durchflussrate, Zuführergeschwindigkeit, der Vordruck im Materialspeicher und das Materialrückzugsverhalten bei Zeilenende. Die Regelung der Geometrie der aus der Austragevorrichtung ausgetretenen Druckmassen durch Änderung dieser Größen wird daher ebenfalls vorgeschlagen.

Messverfahren

Die Messung erfolgt bevorzugt von einer Seite aus, d. h. senkrecht zu der Austragerichtung der Druckmassen, so dass beispielsweise ein ausgetretener Tropfen mit dessen Kugelpartie und Spitzenpartie erfassbar ist. Im Falle einer Lichtmengenmessung ist die Lichtschranke entsprechend angeordnet.

Werden Voxel gedruckt, so wird, um Fadenzug und Tropfengeometrie bestimmen zu können, ein Lichtstrahl bevorzugt, der breiter als der maximal mögliche Tropfendurchmesser ist. Bei Strängen ist eine Messung mit einem Lichtstrahl aussagekräftig, der breiter als der Strangdurchmesser ist. Der Lichtstrahl ist im Querschnitt beispielsweise 0,3 mm im Durchmesser bei runder Geometrie und 0,1 mm x 0,3 mm bei viereckiger Geometrie groß.

Bevorzugt erfolgt die Messung möglichst nah an der Austragevorrichtung, damit z. B. die ermittelten Eigenschaften der Tropfen und Stränge ausreichend Rückschlüsse auf den Zustand der Austragevorrichtung erlauben und nicht durch Umgebungseinflüsse wie Schwebepartikel verfälscht werden. So ist der Abstand des Lichtstrahls von der Austragevorrichtung bevorzugt unter 1 cm, bevorzugt unter 1 mm, insbesondere bevorzugt unter 0,1 mm gewählt.

Die geometrische Vermessung erfolgt mittels zumindest einer Lichtmengenmessung im Durchlichtbetrieb oder im Reflexlichtbetrieb. Dabei sendet ein optischer Sender einen Lichtstrahl aus, der von einem optischen Empfänger detektiert wird. Diese Ausführungsform der Erfindung ist in vielen Fällen günstiger als der Einsatz einer Hochgeschwindigkeitskamera und entsprechender Bildverarbeitung.

Im Durchlichtbetrieb ist der Empfänger dem Sender gegenüber bzw. entgegengesetzt angeordnet. Durchkreuzt eine Druckmasse den Lichtstrahl, dann erzeugt sie aufgrund von Reflexion und Absorption hinter sich einen Schatten, d. h. eine messbare Verringerung der am Empfänger auftreffenden Lichtmenge. Das zeitliche Empfangssignal wird auch als "function of shadowing" bezeichnet. Aus der Verringerung der am Empfänger auftreffenden Lichtmenge wird auf das Vorhandensein von Druckmasse geschlossen. Die genauere Analyse des zeitlichen Empfangssignals erlaubt Rückschlüsse auf die Form der ausgetretenen Druckmasse.

Im Reflexlichtbetrieb sind Empfänger und Sender in einem Winkel von 0° bis 90° zueinander angeordnet. Bei einem Winkel von 0° ist der Sender gleichzeitig Empfänger, was in der vorliegenden Offenbarung auch als Sende-/Empfangseinheit bezeichnet wird. Das Messprinzip ist dabei wie folgt: Durchkreuzt eine Druckmasse den Lichtstrahl, dann erzeugt sie aufgrund von Reflexion ein messbares Signal. Der Empfänger misst den reflektierten Anteil des ausgesendeten Lichts. Aus der Erhöhung der am Empfänger auftreffenden Lichtmenge wird auf das Vorhandensein von Druckmasse im Lichtweg geschlossen. Die genauere Analyse des zeitlichen Signals am Empfänger erlaubt Rückschlüsse auf deren Form.

Werden mehrere Lichtmengenmessungen durchgeführt, beispielsweise durch mehrere Sender und/oder Empfänger, dann kann darüber hinaus eine abweichende Position oder eine ungerade Flugbahn des Tropfens oder eine abweichende Lage des extrudierten Strangs ermittelt werden. Auch bei V-Anordnung (Winkel größer 0° und kleiner 90°) von Sender und Empfänger kann dies ermittelt werden.

Bei der Auswertung des Empfangssignals wird ein Vergleich des über die Zeit empfangenen Signals mit einem Referenzsignal durchgeführt. Das Referenzsignal kann dabei aus einer Datenbank stammen, in der aus Simulationen oder Testläufen stammende Signale gespeichert sind. Alternativ hierzu wird das Referenzsignal bei einer Kalibrierung der 3D-Druckvorrichtung oder jeweils zu Beginn des Drucks des Objekts oder einer Schicht eines Objekts aufgenommen. Im diesen Fällen kann vorteilhaft auf die Veränderung des Materialaustrags über die Zeit reagiert werden, und das Verfahren kann unabhängig von den eingestellten Betriebsparametern ablaufen.

Das Empfangssignal entspricht bei einer Lichtmengenmessung physikalisch einer Faltung der Tropfenform mit der Sensorgeometrie, d.h. eindimensional

$$FS(t) = (g * f_{emp})(t) = \frac{1}{T} \int\limits_a^{a+T} g(\tau) \cdot f_{emp}(t-\tau)d\tau \ ,$$

wobei $f_{emp}$ die Tropfenform und g die Sensorgeometrie darstellen, und wobei t die Zeit, T die Periode und a eine Konstante zur Auswahl der betrachteten Periode bezeichnen.

Der Vergleich des Empfangssignals mit dem Referenzsignal kann unter Einsatz eines elektrotechnischen Filters oder computergestützt mithilfe bekannter mathematischer Verfahren erfolgen. Als elektrotechnischer Filter kann zum Beispiel zunächst ein Optimalfilter zum Abgleich des Empfangssignals mit dem Referenzsignal eingesetzt werden. Daraufhin wird ein Toleranzband um das Referenzsignal festgelegt und festgestellt, ob das Empfangssignal im Toleranzband liegt. Beim computergestützten Vergleich kann beispielsweise zunächst ein bekannter best-fit-Algorithmus verwendet werden, um das Empfangssignals und das Referenzsignal zeitlich aufeinander abzubilden. Das Maß der Abweichung kann dann z. B. mittels Zerlegung der Zeitsignale in Fourierkoeffizienten o.ä. und durch deren Vergleich ermittelt werden. Alternativ oder zusätzlich hierzu kann das Maß der Abweichung mittels Bildung des Integrals bzw. der Summe über den quadrierten Abstand der Zeitsignale zueinander ermittelt werden. Die Ermittlung der Abweichung kann auch die Untersuchung der zeitlichen Ableitungen oder des Integrals der Signale mit einbeziehen.

Im Falle von als Voxel ausgebildeten Druckmassen erfolgt die geometrische Vermessung der Voxel mit einer Abtastrate von mindestens dem fünffachen, bevorzugt von mindestens dem zehnfachen der Druckfrequenz der Voxel. Damit wird gewährleistet, dass ausreichend Daten vorliegen, so dass die geometrische Vermessung der austretenden Druckmassen aussagekräftig ist.

Druckmaterial

Bei der verwendeten Druckmasse handelt es sich bevorzugt um ein Material, welches zumindest während der Verarbeitung in einer fließfähigen Form vorliegt und nach dem Austrag ausgehärtet werden kann. Durch die nachträgliche Aushärtbarkeit kann bei Feststellung eines Fehldrucks ein Prozess wie beispielsweise eine Reinigung des Druckkopfes gefolgt von einem Nachdruck fehlerhaft nicht-gesetzter Druckmassen durchgeführt werden, wobei die unvernetzten Materialien bis zur ihrer Aushärtung fließfähig bleiben, so dass die nachträglich gesetzten Druckmassen sich noch mit den vor der Reinigung gesetzten Druckmassen verbinden können.

Bevorzugt ist vorgesehen, dass eine Aushärtung der Druckmassen mittels Strahlung oder Wärmeeinwirkung erfolgt, besonders bevorzugt ortsselektiv oder flächig mittels Strahlung oder Wärmeeinwirkung. Bevorzugt werden bei dem vorgeschlagenen Verfahren also Druckmassen eingesetzt, die sich nach dem Setzen durch Einwirkung von Strahlung oder Wärme aushärten lassen.

Unter ortsselektiver Belichtung wird verstanden, dass die Wärme- oder Strahlungsquelle relativ zur Basisplatte beweglich angeordnet ist und nur auf ausgewählte Bereiche des Objekts wirkt. Unter einer flächigen Belichtung wird verstanden, dass die Wärme- oder Strahlungsquelle auf das gesamte Objekt bzw. eine gesamte Materialschicht des Objekts auf einmal wirkt.

Beispielsweise wird bei dem vorgeschlagenen Verfahren eine Druckmasse eingesetzt, die sich durch Einwirkung von aktinischer Strahlung aushärten lässt, bevorzugt durch Einwirkung von UV/VIS-Strahlung. UV-Strahlung bzw. UV-Licht weist eine Wellenlänge im Bereich von 100 nm bis 380 nm auf, während sichtbares Licht (VIS-Strahlung) eine Wellenlänge im Bereich von 380 bis 780 nm aufweist. Bevorzugt erfolgt die Einwirkung der UV/VIS-Strahlung auf die Druckmasse durch eine Belichtungseinheit.

Im Fall von mittels Wärmeeinwirkung aushärtender Druckmassen kann eine Infrarotlicht-Quelle (IR) eingesetzt werden, um eine ortsselektive oder flächige Wärmebehandlung durchzuführen.

In dem erfindungsgemäßen Verfahren werden als Druckmasse besonders bevorzugt Silikonkautschukmassen verwendet, die durch UV/VIS-induzierte Additionsreaktion vernetzen. Gegenüber einer thermischen Vernetzung hat die UV/VIS-induzierte Vernetzung Vorteile. Zum einen können Intensität, Einwirkungszeit und Einwirkungsort der UV/VIS-Strahlung genau bemessen werden, während das Aufheizen der ausgetragenen Druckmasse (wie auch deren anschließendes Abkühlen) durch die relativ geringe thermische Leitfähigkeit stets verzögert erfolgt. Aufgrund des intrinsisch sehr hohen thermischen Ausdehnungskoeffizienten der Silikone führen die bei thermischer Vernetzung zwangsläufig vorhandenen Temperaturgradienten zu mechanischen Spannungen, welche die Maßhaltigkeit des gebildeten Objekts negativ beeinflussen, was im Extremfall zu inakzeptablen Formverzerrungen führen kann.

UV/VIS-induzierte additions-vernetzende Silikonkautschukmassen werden beispielsweise in DE 10 2008 000 156 A1, DE 10 2008 043 316 A1, DE 10 2009 002 231 A1, DE 10 2009 027 486 A1, DE 10 2010 043 149 A1 und WO 2009/027133 A2 beschrieben. Die Vernetzung kommt durch UV/VIS-induzierte Aktivierung eines lichtempfindlichen Hydrosilylierungskatalysators zustande, wobei Komplexe des Platins bevorzugt sind. In der Fachliteratur werden zahlreiche lichtempfindliche Platinkatalysatoren beschrieben, die unter Lichtausschluss weitgehend inaktiv sind und durch Bestrahlung mit Licht mit einer Wellenlänge von 250-500 nm in bei Raumtemperatur aktive Platin-Katalysatoren überführt werden können. Beispiele hierfür sind ($\eta$-Diolefin)($\sigma$-aryl)-Platinkomplexe (EP 0 122 008 A1; EP 0 561 919 B1), Pt(II)-$\beta$-diketonatkomplexe (EP 0 398 701 B1) und ($\eta$5-Cyclopentadienyl)tri($\sigma$-alkyl)Platin(IV)-Komplexe (EP 0 146 307 B1, EP 0 358 452 B1, EP 0 561 893 B1). Besonders bevorzugt sind MeCpPtMe$_3$ sowie die sich davon durch Substitution der am Platin befindlichen Gruppen ableitenden Komplexe wie beispielsweise beschrieben in EP 1 050 538 B1 und EP 1 803 728 B1. Die UV/VIS-induziert vernetzenden Druckmassen können ein- oder mehrkomponentig formuliert werden.

Die Geschwindigkeit der UV/VIS-induzierten Additionsvernetzung hängt von zahlreichen Faktoren ab, insbesondere von der Art und Konzentration des PlatinKatalysators, von der Intensität, Wellenlänge und Einwirkungszeit der UV/VIS-Strahlung, der Transparenz, Reflektivität, Schichtdicke und Zusammensetzung der Silikonkautschukmasse und der Temperatur.

Der Platin-Katalysator wird vorzugsweise in einer katalytisch ausreichenden Menge eingesetzt, so dass eine hinreichend schnelle Vernetzung bei Raumtemperatur ermöglicht wird. Vorzugsweise werden 0,1 bis 500 Gew.-ppm des Katalysators bezogen auf den Gehalt des Pt-Metalls zur gesamten Silikonkautschukmasse verwendet, vorzugsweise 0,5 bis 200 Gew.-ppm, besonders bevorzugt 1 bis 50 Gew.-ppm.

Für die Aushärtung der UV/VIS-induziert additions-vernetzenden Silikonkautschukmasse wird bevorzugt Licht der Wellenlänge 240 bis 500 nm, weiter bevorzugt 250 bis 400 nm, besonders bevorzugt 350 bis 400 nm, insbesondere bevorzugt 365 nm eingesetzt. Um eine rasche Vernetzung zu erzielen, worunter eine Vernetzungszeit bei Raumtemperatur von weniger als 20 min, vorzugsweise weniger als 10 min, besonders bevorzugt weniger als 1 min verstanden werden soll, empfiehlt sich die Verwendung einer UV/VIS-Strahlungsquelle mit einer Leistung zwischen 10 mW/cm$^2$ und 20.000 mW/cm$^2$, bevorzugt zwischen 30 mW/cm$^2$ und 15.000 mW/cm$^2$, sowie eine Strahlungsdosis zwischen 150 mJ/cm$^2$ und 20.000 mJ/cm$^2$, bevorzugt zwischen 500 mJ/cm$^2$ und 10.000 mJ/cm$^2$. Im Rahmen dieser Leistungs- und Dosis-Werte lassen sich flächenspezifische Bestrahlungszeiten zwischen maximal 2.000 s/cm$^2$ und minimal 8 ms/cm$^2$ realisieren.

Bevorzugt findet das vorgeschlagene Verfahren Anwendung bei der Herstellung von Objekten, welche Elastomerteile, insbesondere Silikonelastomerteile sind. Für die Herstellung des Elastomerteils wird bevorzugt eine der zuvor vorgeschlagenen Druckmassen verwendet. Elastomere, insbesondere Silikonelastomere, stellen spezielle Anforderungen an das 3D-Druckverfahren, da diese Materialien im Gegensatz z.B. zu thermoplastischen Kunststoffen elastisch sind und sich während der Herstellung des Objekts verformen können. Zudem sind die unvernetzten Materialien bis zur ihrer Aushärtung fließfähig.

Die Erfindung betrifft auch ein mit dem vorgeschlagenen Verfahren hergestelltes Elastomerteil, insbesondere Silikonelastomerteil. Zum Aufbau des Elastomerteils wird bevorzugt eine der zuvor beschriebenen Druckmassen verwendet. Das mit dem vorgeschlagenen Verfahren hergestellte Elastomerteil zeichnet sich durch eine Qualität aus, die der Qualität von mittels Spritzguss hergestellten Elastomerteilen entsprechen kann, oder diese sogar übertrifft. Dabei kann die Oberfläche wie gewünscht angepasst werden. Die Oberfläche kann z. B. strukturiert, insbesondere regelmäßig strukturiert, oder glatt und/oder vollständig geschlossen ausgebildet werden. Dabei weisen die erfindungsgemäß hergestellten Elastomerteile aufgrund des Nachdrucks fehlerhaft nicht-gesetzter Druckmassen außerdem keine eingeschlossenen Luft- oder Gasbläschen auf. Somit können mechanisch beanspruchbare Objekte mit verlässlichen physikalischen Eigenschaften erzeugt werden, welche z. B. auch für medizinische Anwendungen geeignet sind. Beispielsweise können Elastizitäts- oder Glattheitseigenschaften, oder bei optischen Linsen eine isotrope optische Transparenz gewährleistet werden. Des Weiteren zeichnet sich das Elastomerteil dadurch aus, dass dessen Geometrie nicht durch die bei Gussverfahren eingesetzten Formwerkzeuge beschränkt ist. Somit kann das Elastomerteil Hinterschnitte und/oder eingeschlossene Hohlräume aufweisen. Ebenso ist das Elastomerteil frei von Graten, die bei spritzgegossenen Teilen insbesondere an der Trennung der Formhälften und an dem Angusssystem auftreten.

Gemäß einer Ausführungsform ist vorgesehen, dass die Position des Druckkopfes durch eine Positionsmessung laufend ermittelt wird und die Druckmassen von der Austragevorrichtung in Abhängigkeit von der laufend ermittelten Position des Druckkopfes gesetzt werden. Insbesondere wird die Relativposition des Druckkopfs zur Basisplatte und damit zum herzustellenden Objekt ermittelt. Bevorzugt erfolgt hierzu eine Bestimmung der Position für jede der drei Raumrichtungen X, Y und Z. Zumindest wird die Position für diejenigen Raumrichtungen bestimmt, die in einer Ebene parallel zur Basisplatte liegen. Der Austrag der Druckmasse durch die Austragevorrichtung erfolgt dabei jeweils unter Berücksichtigung der ermittelten Ist-Position und nicht aufgrund einer angenommenen Soll-Position.

Das laufende Ermitteln der Position des Druckkopfs ist beispielsweise vorteilhaft, falls die Herstellung des Objekts unterbrochen wird. Eine solche Unterbrechung kann beispielsweise erforderlich werden, um die verwendete Austragevorrichtung zur reinigen. Hierzu kann der Druckkopf in eine sichere, vom bereits teilweise aufgebauten Objekt entfernte Position gebracht und dort gereinigt werden. Etwaige Positionsänderungen des Druckkopfs bei der Reinigung, beispielsweise durch während der Reinigung auf den Druckkopf übertragene Kräfte, werden nach wie vor fortlaufend ermittelt und berücksichtigt, wenn der Druckvorgang wieder fortgesetzt wird. Die Reinigungsintervalle sind bevorzugt programmierbar, so dass sie abhängig von der verarbeiteten Druckmasse angepasst werden können.

Ein weiterer Grund für eine Unterbrechung kann das Auslösen einer Sicherheitsvorrichtung sein. Der Druckkopf ist ein bewegliches Teil und es besteht die Gefahr, dass ein Bediener der 3D-Druckvorrichtung verletzt wird, wenn er beispielsweise mit seinen Händen in die Nähe sich bewegender Teile gerät. Im Stand der Technik sind daher Not-Aus Schalter üblich, die die Stromzufuhr zu der verwendeten Positioniereinrichtung unterbrechen. Aufgrund der Trägheit des Druckkopfes oder aufgrund von äußerer Krafteinwirkung auf den Druckkopf kann sich dieser auch nach Abschalten der Stromzufuhr weiter bewegen, so dass seine tatsächliche Ist-Position von der zuletzt bekannten Soll-Position abweichen kann. Vorteilhafterweise ist vorgesehen, die Positionsmesseinrichtung weiter zu betreiben, so dass auch bei Auslösen eines Not-Aus Schalters die Position des Druckkopfes weiterhin fortlaufend ermittelt wird. Hierzu ist bevorzugt vorgesehen, dass die Stromversorgung für die Positionsmesseinrichtung von der der Positioniereinrichtung getrennt ist. Dies ermöglicht es, die Herstellung des Objekts nahtlos fortzusetzen, in dem der Druckkopf nach Wiederherstellen der Stromversorgung der Positioniereinrichtung wieder zurück an seine Soll-Position geführt wird. Vorteilhaft können dadurch insbesondere aufwendige oder teure 3D-Objekte, die sonst nach einem Not-Aus ausgeschossen würden, zu Ende gefertigt werden und bleiben erhalten.

Ein weiterer Vorteil der laufenden Ermittlung der tatsächlichen Position des Druckkopfs besteht darin, dass ein Nicht-Erreichen einer vorgegebenen Position erkannt werden kann. Hierbei wird eine vorgegebene Soll-Position als nicht erreicht angesehen, wenn die ermittelte Ist-Position des Druckkopfes um mehr als eine vorgegebene Toleranz abweicht. Diese kann beispielsweise fest vorgegeben werden, beispielsweise im Bereich von 0,1 bis 0,5 mm. Ebenfalls ist es denkbar, die Toleranz in Bezug auf die Größe eines Voxels oder eines Strangs vorzugeben, beispielsweise bezogen auf den Durchmesser eines näherungsweise sphärischen Voxels oder den Durchmesser eines Strangs. Beispielsweise kann eine Position dann als "nicht erreicht" gelten, wenn die gemessene Position in einem definierten Zeitraum zu keinem Zeitpunkt mit der Soll-Position im Toleranzbereich übereinstimmt. Nicht erreichte Positionen werden beispielsweise an die Steuereinrichtung zurückgemeldet, woraufhin die Information weiterverarbeitet, z. B. protokolliert und zur Steuerung des weiteren Druckvorgangs verwendet werden.

In einer weiter bevorzugten Ausführungsform der Erfindung ist vorgesehen, dass zusätzlich zu der beschriebenen Ermittlung fehlerhaft nicht-gesetzter Druckmassen anhand der gewonnenen Erkenntnisse über die Geometrie der Druckmassen diese auch anhand der laufenden Positionsmessung zu ermitteln. Wird eine vorgegebene Position durch den Druckkopf nicht erreicht, so kann an der vorgegebenen Position nicht wie vorgesehen Druckmasse ausgetragen werden. Dies äußert sich im Objekt ebenfalls als fehlerhaft nicht-gesetzte Druckmasse. Wird auf diese Weise eine fehlerhaft nicht-gesetzte Druckmasse erkannt, so wird dies bevorzugt zusammen mit der Position, an der die Druckmasse gesetzt werden sollte, protokolliert. Um die nicht-gesetzten Druckmassen nachzudrucken, wird der Druckkopf wieder an die protokollierte Position bewegt und der Austrag wird, wie zuvor beschrieben, bevorzugt vor Aushärtung der Druckmassen wiederholt.

## 3D-Druckverfahren

Um mit den ausgetragenen Druckmassen ein Objekt aufzubauen, werden die Druckmassen gemäß einem vorgegebenen Schema auf der Basisplatte abgelegt, wobei eine erste Materialschicht ausgebildet wird. Nach dem Ausbilden der ersten Materialschicht wird z.B. der Abstand zwischen der Austragevorrichtung und der Basisplatte vergrößert und es wird die nächste Materialschicht ausgebracht. Es folgen weitere Materialschichten, die jeweils nach einem vorgegebenen Schema abgelegt werden, bis das gewünschte Objekt fertiggestellt ist.

Das Austragen der Druckmassen erfolgt nach einem Schema, welches aus einer Vorlage abgeleitet wird. Die Vorlage wird in der Regel mit einer CAD-Software (Computer-Aided Design, rechnerunterstütztes Konstruieren) entworfen oder wird durch dreidimensionales Scannen eines Gegenstands erstellt. Zur Ableitung des Schemas für den Materialaustrag berechnet die Software typischerweise horizontale Schnitte der Vorlage, wobei jeder dieser Schnitte einer Materialschicht entspricht. Im Anschluss wird berechnet, wie die Druckmassen in der jeweiligen Schicht platziert werden müssen. Hierbei wird berücksichtigt, ob der Austrag der Druckmassen in Form von Voxeln, in Form von Strängen oder in einer Kombination aus Voxeln und Strängen erfolgt.

Gegebenenfalls wird beim Ableiten des Schemas auch das Setzen von Stützmaterial eingeplant. Das Setzen von Stützmaterial kann erforderlich sein, wenn das herzustellende Objekt Hohlräume, Hinterschnitte, überhängende, freitragende oder dünnwandige Teile aufweisen soll, da die Druckmassen nicht frei im Raum schwebend gesetzt werden können. Das Stützmaterial füllt während des Druckprozesses Raumvolumina aus und dient als Basis oder als Gerüst, um darauf die Druckmassen setzen und aushärten zu können. Das Stützmaterial wird nach Beendigung des Druckprozesses wieder entfernt und gibt die Hohlräume, Hinterschnitte sowie überhängenden, freitragenden oder dünnwandigen Partien des Objekts frei. In der Regel wird als Stützmaterial ein von dem Material der Druckmassen abweichendes Material verwendet. Abhängig von der Geometrie des Objekts wird die notwendige Form des Stützmaterials berechnet. Bei der Berechnung der Form des Stützmaterials können verschiedene Strategien eingesetzt werden, um beispielsweise möglichst wenig Stützmaterial zu verwenden oder um die Maßhaltigkeit des Produktes zu erhöhen. Das ausgetragene Stützmaterial wird bevorzugt ebenso geometrisch vermessen wie die weiteren zuvor beschriebenen Druckmassen. Hierzu kann eine gesonderte Vorrichtung vorgesehen sein.

Bei der Ableitung des Schemas für den Materialaustrag aus den horizontalen Schnitten können verschiedene Verfahrstrategien verwendet werden, wobei durch die Wahl der Verfahrstrategie auch die Eigenschaften des hergestellten Objekts beeinflusst werden können. Bei einem Austrag in Form von Voxeln kann beispielsweise eine Dual-Verfahrstrategie, eine Xing-Verfahrstrategie oder eine Border-Verfahrstrategie verwendet werden.

Bei der Dual-Verfahrstrategie wird der Druckkopf entlang einer gewählten Hauptdruckrichtung in Bezug auf die Basisplatte zeilenweise hin und her bewegt und linienweise Druckmasse dosiert. Nach jeder Zeile wird der Druckkopf um eine Zeilenbreite senkrecht zur Drucklinie weiter bewegt, danach wiederholt sich der Austrag der Druckmasse. Der Prozess ähnelt dabei dem Druck eines herkömmlichen Tintenstrahldruckers.

Die Xing-Verfahrstrategie entspricht weitestgehend der Dual-Verfahrstrategie. Im Gegensatz zur Dual-Verfahrstrategie wird nach jeder oder nach jeder n-ten Materialschicht (wobei n eine natürliche Zahl ist) die Hauptdruckrichtung um 90° gedreht. Dies führt zu einer genaueren Einhaltung einer Formstabilität des Objekts, weil durch die Drehung der Materialschichten eine gleichmäßige Verteilung der Druckmasse sichergestellt wird.

Vorteile der Dual-Verfahrstrategie als auch der Xing-Verfahrstrategie sind, dass beispielsweise eine hohe Genauigkeit der Kanten des Objekts erzielt werden kann.

Bei der Border-Verfahrstrategie wird für jede Materialschicht zuerst die äußere Umrandung des Objekts hergestellt und im Anschluss die eingeschlossene Fläche z.B. mittels der Dual-Verfahrstrategie oder der Xing-Verfahrstrategie aufgefüllt. Bei der Border-Verfahrstrategie kann die äußere Umrandung der zu druckenden Schicht mit kleineren Voxeln in höherer Auflösung erzeugt werden als das Innere der zu druckenden Schicht oder als das innere Volumen des Objekts. Im Inneren des herzustellenden Objekts können größere Voxel zum Auffüllen verwendet werden, ohne dass sich die damit einhergehende geringere Auflösung auf die Genauigkeit der geometrischen Abmessungen oder auf die Oberflächengüte des herzustellenden Objekts auswirkt.

Die benannten Verfahrstrategien stellen Grundmuster dar. Sie können auch im Rahmen desselben Objekts kombiniert und variiert werden, wenn es zweckmäßig erscheint. Auch Mischformen zwischen den verschiedenen Verfahrstrategien sind denkbar.

Sind die Druckmassen als Voxel ausgebildet, so kann zusätzlich zu der Wahl der Verfahrstrategie ein Voxel-Versatz beim Erstellen des Schemas für den Materialaustrag berücksichtigt werden. Hierbei werden die Voxel innerhalb einer Schicht nicht starr entlang eines orthogonalen Rasters ausgerichtet, sondern können zueinander versetzt gesetzt werden. Beispielsweise kann bei näherungsweise sphärischen Voxeln jede zweite Zeile um einen halben Voxeldurchmesser versetzt gesetzt werden. Hierdurch kann der Zeilenabstand im Vergleich zu einem orthogonalen Raster reduziert werden. Die Voxel werden dichter gesetzt und die Oberflächengüte steigt. Durch den Versatz der Voxel kann die Kantenschärfe abnehmen.

Zusätzlich oder alternativ zu einem versetzten Setzen der Voxel in der Ebene einer Materialschicht ist es möglich, die Voxel zweier benachbarter Ebenen zueinander versetzt anzuordnen.

Ist die Austragevorrichtung eingerichtet, Voxel verschiedener Größe zu setzen, so kann zusätzlich insbesondere im Bereich der Kanten des Objekts die Größe der gesetzten Druckmassen variiert werden, um eine höhere Kantenschärfe zu erreichen. Bevorzugt wird der Ort, an dem ein Voxel gesetzt wird, sowie dessen Größe so gewählt, dass die Kanten des Objekts möglichst exakt reproduziert werden. Beispielsweise werden im Bereich einer Kante anstelle eines einzelnen Voxels mehrere kleinere Voxel platziert. Die erzielbare Kantenschärfe und/oder Oberflächengüte wird dadurch erhöht.

Die Eigenschaften des herzustellenden Objekts lassen sich durch entsprechende Wahl der beim Setzen der Druckmassen verwendeten Parameter, insbesondere der Parameter der Austragevorrichtung, beeinflussen. Beispiele für beeinflussbare Eigenschaften des Objekts sind die Kantenschärfe, Oberflächengüte und Formstabilität. Die Eigenschaften des herzustellenden Objekts werden dabei durch die Konfiguration der Austragevorrichtung vor einem Druckbeginn bestimmt.

Unter Kantenschärfe wird verstanden, wie scharf die Abgrenzung von einem zum Objekt zugehörigen Bereich, an dem Druckmassen gesetzt werden sollen, zu einem außerhalb des Objekts liegenden Bereich ist, an dem keine Druckmassen gesetzt werden sollen. Je abrupter der Übergang ist, desto höher ist die Kantenschärfe. Typischerweise wird die Kantenschärfe besser, wenn die Größe der Voxel bzw. der Durchmesser der Stränge verringert wird. Umgekehrt sinkt die Kantenschärfe, wenn die Größe der Voxel bzw. der Durchmesser der Stränge erhöht wird.

Unter der Oberflächengüte wird verstanden, wie glatt eine Oberfläche ist. Eine Oberfläche hoher Güte ist geschlossen und glatt, frei von Vertiefungen und Ausbuchtungen, z. B. mit einer Oberflächenrauhigkeit Ra < 0,4 $\mu$m. Derartige Oberflächen werden im Idealfall z.B. durch Spritzguss erreicht.

Unter der Formstabilität wird verstanden, ob die geometrischen Abmessungen des Objekts maßhaltig sind, also keine oder nur geringe Abweichungen von den Abmessungen der Vorlage aufweisen.

Einige Jetting-, bzw. Dispenser-Betriebsparameter können im Rahmen der Erfindung auch während des Drucks, z.B. jeweils nach einer oder mehreren Materialschichten oder sogar von Voxel zu Voxel, von Strang zu Strang, von Voxel zu Strang oder von Strang zu Voxel, variiert werden, zum Beispiel auch in Abhängigkeit der bekannten tatsächlichen Positionen der bereits gesetzten Voxel und Stränge, was eine Nachjustierung der Eigenschaften des herzustellenden Objekts ermöglicht.

Bevorzugt erfolgt im Falle von als Voxeln ausgebildeten Druckmassen die Einstellung oder Nachjustierung der Kantenschärfe des Objekts durch Einstellen der Voxelgröße und/oder die Einstellung der Oberflächengüte des Objekts durch Einstellen des Voxelversatzes und/oder die Einstellung der Formstabilität des Objekts durch Einstellen der Verfahrstrategie der 3D-Druckvorrichtung. Die Voxelgröße kann durch die Konfiguration der Jetting-Parameter variiert werden.

Bevorzugt erfolgt im Falle von als Stränge ausgebildeten Druckmassen die Einstellung oder Nachjustierung der Kantenschärfe und der Oberflächengüte des Objekts durch Einstellen eines Volumenstroms und/oder die Einstellung der Formstabilität durch Einstellen der Verfahrstrategie der Austragevorrichtung. Der Volumenstrom kann wie beschrieben durch die Konfiguration der Dispenser-Parameter variiert werden.

Als Volumenstrom wird das ausgetragene Volumen der Druckmasse pro Zeiteinheit bezeichnet. Bei dem Setzen von Strängen bewegt sich der Druckkopf mit der Austragevorrichtung während des Austragens des Strangs relativ zur Basisplatte bzw. dem Objekt. Die Form des gesetzten Strangs auf der Basisplatte bzw. dem Objekt ist von dem Volumenstrom und einer Momentangeschwindigkeit des Druckkopfes abhängig, sowie vom Abstand zur Basisplatte, bzw. in weiteren Ausführungsformen von einer Eindringtiefe der Düse in die letzte Schicht. Es ist vorteilhaft, zum Setzen einer vorgegebenen Menge an Druckmasse den Volumenstrom auf die Momentangeschwindigkeit abzustimmen, damit die Form des gesetzten Strangs der gewünschten Form entspricht.

Die Momentangeschwindigkeit kann beispielsweise aus der fortlaufend ermittelten Position des Druckkopfes berechnet werden, indem zu zwei Zeitpunkten die Position des Druckkopfes ermittelt wird, die Differenz zwischen den ermittelten Positionen gebildet wird und durch die zwischen den beiden Zeitpunkten verstrichene Zeitspanne geteilt wird.

Für das Durchführen der Aushärtung wird eine Aushärtestrategie verwendet. Bevorzugt erfolgt eine Aushärtung der Druckmassen nach dem Setzen einer Schicht von Druckmassen, nach dem Setzen mehrerer Schichten von Druckmassen oder direkt während des Drucks.

Ein Aushärten der Druckmassen direkt während des Drucks wird als direkt-Aushärtestrategie bezeichnet. Werden durch UV/VIS-Strahlung aushärtbare Druckmassen verwendet, so ist dann im Vergleich zu anderen Aushärtestrategien die UV/VIS-Quelle sehr lange aktiv, so dass mit sehr viel geringerer Intensität gearbeitet werden kann, was zu einem langsamen Durchvernetzen des Objekts führt. Dies begrenzt die Erwärmung des Objekts und führt zu maßhaltigen Objekten, da keine Ausdehnung des Objekts aufgrund von Temperaturspitzen auftritt.

Bei der pro layer-Aushärtestrategie erfolgt nach dem Setzen jeder vollständigen Materialschicht die strahlungsinduzierte Vernetzung der gesetzten Materialschicht. Während dieses Vorgangs verbindet sich die frisch gedruckte Schicht mit der ausgehärteten darunterliegenden gedruckten Schicht. Das Aushärten erfolgt nicht sofort nach dem Setzen einer Druckmasse, so dass die Druckmassen vor dem Aushärten Zeit haben um zu relaxieren. Hiermit ist gemeint, dass die Druckmassen ineinander fließen können, wodurch eine glattere Oberfläche als bei der direkt-Aushärtestrategie erzielt wird.

Bei der n-te layer-Aushärtestrategie wird ähnlich wie bei der pro layer-Aushärtestrategie verfahren, jedoch wird das Aushärten erst nach dem Setzen von n Materialschichten vorgenommen, wobei n eine natürliche Zahl ist. Die für das Relaxieren der Druckmassen zur Verfügung stehende Zeit wird weiter erhöht, wodurch sich die Oberflächengüte weiter verbessert. Aufgrund des Fließens der Druckmassen kann die erzielbare Kantenschärfe jedoch abnehmen.

In einer bevorzugten Ausführungsform wird die Aushärtestrategie mit dem Nachdrucken nicht-gesetzter Druckmassen abgestimmt. Beispielsweise kann jeweils nach dem Drucken einer Materialschicht das Nachdrucken der fehlerhaft nicht-gesetzten Druckmassen erfolgen, bevor die Vernetzung der gesetzten Materialschicht nach der pro layer-Aushärtestrategie bzw. n-te layer-Aushärtestrategie erfolgt.

<u>3D-Druckvorrichtung</u>

Ein weiterer Aspekt der Erfindung ist es, eine 3D-Druckvorrichtung zur Herstellung eines Objekts im 3D-Druckverfahren bereitzustellen. Die 3D-Druckvorrichtung hat zumindest einen Druckkopf, der zumindest eine Austragevorrichtung aufweist, wobei die Austragevorrichtung eine Steuereinrichtung aufweist, um Druckmassen an Soll-Positionen zu setzen, um das Objekt generativ zu erzeugen.

Die 3D-Druckvorrichtung ist zur Ausführung eines der hierin beschriebenen Verfahren ausgeführt und/oder eingerichtet. Dementsprechend werden im Rahmen der Verfahren beschriebene Merkmale entsprechend für die 3D-Druckvorrichtung und umgekehrt die im Rahmen der 3D-Druckvorrichtung beschriebenen Merkmale entsprechend für die Verfahren offenbart.

Erfindungsgemäß ist vorgesehen, dass die 3D-Druckvorrichtung zumindest eine optischen Messeinrichtung aufweist, die so angeordnet und ausgerichtet ist, dass im Bereich der Austragevorrichtung aus der Austragevorrichtung austretende Druckmassen mittels zumindest einer Lichtmengenmessung im Durchlichtbetrieb oder im Reflexlichtbetrieb detektiert und/oder geometrisch vermessen werden können, während sie austreten, oder nachdem sie ausgetreten sind und bevor sie gesetzt sind.

Bevorzugt umfasst die optische Messeinrichtung eine Lichtschranke mit einem optischen Sender und einem optischen Empfänger. Vorzugsweise werden dabei lichtreduzierte Lasermikrometer eingesetzt.

Gemäß einer bevorzugten Ausführungsform werden der Sender und der Empfänger mittels geeigneter Halterungen an einer Verfahrachse des Druckkopfs angeordnet. Alternativ ist eine Befestigung direkt am Druckkopf bzw. an der Austragevorrichtung möglich. Die optische Messeinrichtung kann dabei in einem festen Abstand zur Austrittsöffnung der Austragevorrichtung oder mittels einer einstellbaren Halterung in variierbarem Abstand montiert sein.

Gemäß einer weiteren Ausführungsform umfasst die optische Messeinrichtung zumindest einen Lichtwellenleiter. Dabei sind typischerweise jeweils ein Lichtwellenleiter für den Sender und den Empfänger vorgesehen. Im Reflexlichtbetrieb kann vorgesehen sein, lediglich einen einzigen Lichtwellenleiter mit der Austragevorrichtung zu verbinden, wobei eine Sende-/Empfangseinheit eingesetzt wird.

Der Lichtwellenleiter ist bevorzugt derart angeordnet, dass dessen Lichtaustrittsfläche entweder in die Austragevorrichtung integriert ist oder mittels eines Aufsatzes an der Austragevorrichtung befestigt ist, so dass der austretende Lichtstrahl, beispielsweise ein Laserstrahl, sich direkt am Ausgang der Austragevorrichtung oder im Tropfen- bzw. Strangkanal integriert befindet. Sender und Empfänger können bei dieser Ausführungsform unabhängig vom Druckkopf an der 3D-Druckvorrichtung angeordnet werden. Diese Variante hat den Vorteil, dass der Lichtwellenleiter in einem sehr geringen Abstand zum Tropfen bzw. bei der integrierten Variante ohne Abstand angeordnet werden kann, so dass der Lichtstrahl geringer äußerer Beeinflussung, wie beispielsweise frei herumfliegende Partikel, ausgesetzt ist. Weiterhin vorteilhaft ist, dass keine schweren Komponenten am Druckkopf oder an der Verfahrachse angeordnet sein müssen, welche während des 3D-Drucks mitbeschleunigt werden müssen.

Gemäß einer bevorzugten Ausführungsform ist der Basisplatte zumindest ein Gewichtssensor zugeordnet. Die Gewichtsmessung kann z. B. elektronisch an den Auflagepunkten der Basisplatte erfolgen. Durch die Gewichtssensoren kann die Masse, bzw. Zunahme an Masse des gedruckten Objekts laufend ermittelt und aufgezeichnet werden. Auch die Masse eines einzelnen Druckvoxels kann durch Messung der Gewichtszunahme des Druckkörpers auf der Basisplatte bestimmt werden. In Kombination mit der Tropfenerkennung und einer Überwachung der ausgetretenen Druckmasse ist dabei eine Erkennung etwaiger Fremdkörperkontamination der Druckmasse erreichbar. Für den Fall, dass eine Fremdkörperkontamination festgestellt wird, werden automatisierte Meldungen oder Handlungen entsprechend erzeugt bzw. ausgeführt.

Wird eine schlagartige Gewichtszunahme auf der Basisplatte, beispielsweise über einer bestimmten Gewichtsgrenze wie 1 kg detektiert, so kann vorgesehen sein, den Druckprozess sofort zu unterbrechen. Dies ist eine Personenschutzmaßnahme bei unerlaubtem Eingriff in den Druckbereich. Der Druckkopf wird dabei nicht weiter bewegt und Alarmmeldungen werden ausgegeben.

Die 3D-Druckvorrichtung weist gemäß einer bevorzugten Ausführungsform außerdem eine Positionsmesseinrichtung auf, mittels welcher die Position des Druckkopfes laufend ermittelbar ist, wobei die Positionsmesseinrichtung mit einer Steuereinrichtung der Austragevorrichtung verbunden ist, und wobei die Austragevorrichtung eingerichtet ist, die Druckmassen abhängig von der laufend ermittelten Position des Druckkopfes zu setzen.

Die 3D-Druckvorrichtung umfasst weiterhin eine Basisplatte, auf der das Objekt durch Austragen von Druckmasse aus der Austragevorrichtung des Druckkopfs aufgebaut wird. Die Basisplatte und der Druckkopf werden hierbei relativ zueinander bewegt, wobei Relativbewegungen in allen drei Raumrichtungen X, Y und Z möglich sind. Hierzu kann beispielsweise der Druckkopf derart angeordnet sein, dass dieser in X- und Y-Richtung beweglich ist und die Basisplatte kann derart angeordnet sein, dass diese in Z-Richtung beweglich ist. Auch weitere Konfigurationen sind hierbei denkbar, beispielsweise kann die Basisplatte in Y-Richtung beweglich angeordnet werden und der Druckkopf kann derart angeordnet werden, dass dieser in X- und Z-Richtung beweglich ist. Alternativ oder zusätzlich hierzu kann vorgesehen sein, die Basisplatte und/oder den Druckkopf schwenkbar auszugestalten, so dass beliebige Raumanordnungen möglich sind.

Es können mehrere, auch technisch unterschiedliche Austragevorrichtungen für verschiedene Druckmassen in der 3D-Druckvorrichtung vorgesehen sein.

Die jeweilige Austragevorrichtung weist eine Austragsachse auf, die die Richtung angibt, in die Material aus der Austragevorrichtung ausgetragen wird. Üblicherweise ist die Austragsachse derart mit Bezug zur Basisplatte orientiert, dass diese senkrecht zur Basisplatte steht. Optional kann vorgesehen sein, dass die 3D-Druckvorrichtung derart konfiguriert ist, dass auch die Ausrichtung der Austragsachse relativ zur Basisplatte verändert werden kann.

Zur Abgabe einzelner Tropfen kann die Austragevorrichtung eine oder mehrere Düsen umfassen, die Flüssigkeitstropfen aus Druckmasse in Richtung der Basisplatte emittieren, ähnlich wie es die Düsen eines Tintenstrahldruckers tun. Daher werden diese Düsen auch als Jettingdüsen bezeichnet. Verschiedene Ausführungsformen sind dem Fachmann bekannt. Die Jettingdüsen sind derart eingerichtet, dass diese nur auf Anforderung kontrolliert einen Tropfen abgeben. Bei bevorzugten Ausführungsformen der Jettingdüsen kann beim Austrag der Druckmasse das Volumen des Tropfens beeinflusst werden, so dass Tropfen unterschiedlicher Größe erzeugt werden können.

Es kann beispielsweise ein Heizelement in der Jettingdüse vorgesehen sein, mit dem die Druckmasse erhitzt wird und ein Tropfen von einer entstehenden Dampfblase aus der Jettingdüse getrieben wird, dies ist als Bubble-Jet bekannt.

Eine weitere Möglichkeit ist das Anordnen eines Piezoelements, welches sich aufgrund einer elektrischen Spannung verformt und hierdurch einen Tropfen aus einer Jettingdüse pressen kann. Derartige Tintenstrahldruckverfahren sind dem Fachmann aus dem klassischen Druck und aus dem sogenannten 3D-Druck, bei dem aus einer fotopolymerisierbaren Tinte dreidimensionale Gegenstände schichtweise aufgebaut werden, grundsätzlich bekannt. Derartige Druckköpfe, wie sie im Tintenstrahldruck oder in Multijet-3D-Druck eingesetzt werden, können typischerweise niederviskose Drucktinten bzw. Druckmassen dosieren, z.B. solche mit Viskositäten unter 50 mPa·s.

In den Druckköpfen in dem erfindungsgemäßen Verfahren werden bevorzugt Austragevorrichtungen eingesetzt, die auf Jet-Ventilen mit Piezoelementen basieren. Diese ermöglichen das Austragen sowohl niedrigviskoser Materialien, wobei Tropfenvolumen für Tropfen von einigen wenigen Pikolitern (pL) (2 pL entsprechen einem Tropfendurchmesser von ca. 0,035 $\mu$m) realisiert werden können, als auch mittel- und hochviskoser Materialien wie der Silikonkautschukmassen, wobei Piezo-Druckköpfe mit einem Düsendurchmesser zwischen 50 und 500 $\mu$m bevorzugt werden und Tropfenvolumen im Nanoliter-Bereich (1 bis 100 nL) erzeugt werden können. Mit niedrigviskosen Massen (< 100 mPa·s) können diese Druckköpfe Tröpfchen mit sehr hoher Dosierfrequenz abscheiden (ca. 1 - 30 kHz), während mit höherviskosen Massen (> 100 Pa·s) in Abhängigkeit von den rheologischen Eigenschaften (scherverdünnendes Verhalten) Dosierfrequenzen bis zu ca. 500 Hz erzielt werden können. Geeignete Jettingdüsen werden beispielsweise in DE 10 2011 108 799 A1 beschrieben.

Zur Abgabe von Strängen aus Druckmasse wird die Druckmasse mittels Druckbeaufschlagung eines Vorratsbehälters, z.B. aus einer Kartusche, Spritze oder einem Fass, durch eine Düse als Strang herausgepresst und auf der Basisplatte zum Objekt selektiv abgeschieden. Derartige Austragevorrichtungen werden im Rahmen dieser Beschreibung als Dispenser bezeichnet. Der Druckaufbau kann z.B. mittels Luftdruck oder mechanisch, z.B. durch einen kleinen Extruder, mittels einer Kolbenpumpe oder mittels einer Exzenterschnecke erfolgen. Verschiedene Ausführungsformen sind dem Fachmann bekannt.

Die Austragevorrichtung weist eine Steuereinrichtung auf. Mit der Steuereinrichtung wird das Setzen von Druckmassen durch die Austragevorrichtung gesteuert. Die Steuereinrichtung kann zum Setzen der Druckmassen die aus dem Schema abgeleitete Soll-Position und bevorzugt zusätzlich die laufend ermittelte Ist-Position und weiter bevorzugt zusätzlich auch weitere Eingangsgrößen, wie beispielsweise die Momentangeschwindigkeit des Druckkopfes heranziehen. Die Steuereinrichtung kann beispielsweise einen Mikrokontroller umfassen, der mit der Positionsmesseinrichtung und der Austragevorrichtung in Verbindung steht. Die Steuereinrichtung kann als separate Einheit ausgeführt sein oder auch in Kombination mit einer Maschinensteuerung der 3D-Druckvorrichtung vorliegen. Die Maschinensteuerung kann ebenfalls einen Mikrokontroller umfassen, wobei dieser mit einer Positioniereinrichtung in Verbindung steht.

Die Positioniereinrichtung ist eingerichtet, den Druckkopf relativ zu einer Basisplatte zu positionieren, wobei die Relativposition zumindest entlang der drei Raumachsen X, Y und Z verstellbar ist, ggf. auch drehbar. Die Positioniereinrichtung umfasst mindestens einen Motor, wobei üblicherweise für jede verstellbare Raumachse zumindest ein separater Motor vorgesehen ist. Der Motor ist beispielsweise als Elektromotor, insbesondere als Schrittmotor ausgeführt.

Die Austragevorrichtung weist eine von der Steuereinrichtung angesteuerte Jettingdüse oder einen Dispenser auf. In einer Ausführungsform weist die 3D-Druckvorrichtung mehrere einem Druckkopf zugeordnete ausgestaltete Austragevorrichtungen auf. Dabei kann der Druckkopf mehrere verschiedene Austragevorrichtungen aufweisen, z.B. eine oder mehrere Jettingdüsen und einen oder mehrere Dispenser. Hierbei können beispielsweise über den oder die Dispenser schnell die Druckmassen im Inneren des Objekts gesetzt werden und mit der oder den Jettingdüsen in hoher Qualität die Oberfläche des Objekts hergestellt werden. Alternativ ist es denkbar, dass der Druckkopf mehrere gleichartige Austragevorrichtungen umfasst. Hierdurch können beispielsweise mehrere Objekte gleichzeitig generativ hergestellt werden oder es kann mit mehreren Austragevorrichtungen parallel an dem Aufbau eines einzelnen Objekts gearbeitet werden. In beiden Fällen wird die insgesamt erforderliche Druckdauer reduziert.

Im Fall einer Jettingdüse als Austragevorrichtung wird durch die Steuereinrichtung vorgegeben, wann die Jettingdüse einen Voxel austrägt. Des Weiteren kann vorgesehen sein, dass durch die Steuereinrichtung die Größe des Voxels vorgegeben wird.

Im Fall eines Dispensers als Austragevorrichtung wird durch die Steuereinrichtung vorgegeben, wann der Dispenser mit dem Austragen von Druckmasse in Form eines Strangs beginnt und wann das Austragen beendet wird. Des Weiteren kann vorgesehen sein, dass der Volumenstrom, also wieviel Druckmasse in welcher Zeit ausgetragen wird, durch die Steuereinrichtung vorgegeben wird.

Wird Stützmaterial eingesetzt, so kann der Druckkopf eine oder mehrere weitere Austragevorrichtungen für das Stützmaterial aufweisen. Alternativ oder zusätzlich kann für das Austragen von Stützmaterial auch ein weiterer Druckkopf mit einer entsprechenden Austragevorrichtung vorgesehen sein.

Die Positionsmesseinrichtung ist eingerichtet, die Position des Druckkopfs laufend zu bestimmen. Hierzu kann vorgesehen sein, dass die Positionsmesseinrichtung Messungen der Position des Druckkopfs mit einer vorgegebenen Rate vornimmt und an die Steuereinrichtung übermittelt.

Die Positionsmesseinrichtung ist bevorzugt eingerichtet, zu jeder durch die Positioniereinrichtung verstellbaren Achse oder Raumrichtung eine Messung der Position mit Bezug zu dieser Achse oder Raumrichtung vorzunehmen.

Zumindest ist die Positionsmesseinrichtung eingerichtet, die Position des Druckkopfes innerhalb einer Ebene parallel zu der Basisplatte zu bestimmen. Bevorzugt ist sie eingerichtet, die Position des Druckkopfes im Raum zu bestimmen.

Die Positionsmesseinrichtung weist bevorzugt zumindest einen Schrittzähler am Motor, Drehgeber (Encoder), optischen Maßstab, insbesondere einen Glasmaßstab, GPS-Sensor, Radarsensor, Ultraschallsensor, LIDAR-Sensor und/oder zumindest eine Lichtschranke auf. Der Schrittzähler am Motor kann insbesondere als berührungsloser Schalter, beispielsweise als Magnetsensor, insbesondere Hallsensor ausgestaltet sein.

Die 3D-Druckvorrichtung weist bevorzugt zusätzlich ein Hauptsteuergerät auf, welches eine Vorlage bzw. ein Computermodell des zu druckenden Objekts enthält, wobei das Hauptsteuergerät und die Steuereinrichtung der Austragevorrichtung für eine bidirektionale Kommunikation miteinander eingerichtet sind.

Das Hauptsteuergerät kann beispielsweise als ein Computer ausgeführt sein, welcher mit der Steuereinrichtung beispielsweise über ein Datennetzwerk wie z. B. Ethernet oder WLAN oder über eine Verbindung wie z. B. eine serielle Verbindung oder USB kommuniziert.

Auf dem Hauptsteuergerät kann das Computermodell in einem beliebigen Dateiformat hinterlegt sein. Übliche Dateiformate umfassen z.B. STL, OBJ, CLI/SLC, PLY, VRML, AMF, STEP, IGES. Bei der Durchführung des beschriebenen Verfahrens werden durch das Hauptsteuergerät virtuelle horizontale Schnitte durch das Modell erzeugt (sog. *slicen*). Aus diesen horizontalen Schnitten wird im Anschluss ein Schema berechnet, welches angibt, wie die Druckmassen zum generativen Aufbauen des Objekts platziert werden müssen. Hierbei wird berücksichtigt, ob der Austrag der Druckmassen in Form von Voxeln, in Form von Strängen oder in Form einer Kombination aus Voxeln und Strängen erfolgt. Erfordert die Form des Objekts das Setzen von Stützmaterial, so ist das Hauptsteuergerät bevorzugt eingerichtet, auch ein Schema zum Setzen des Stützmaterials zu erzeugen. Das Berechnen und Setzen von Stützmaterial kann auch entkoppelt erfolgen.

Während der Herstellung des Objekts kommunizieren das Hauptsteuergerät und die Steuereinrichtung miteinander, so dass das Hauptsteuergerät in Abhängigkeit der detektierten austretenden, bzw. insbesondere der detektierten fehlerhaft nicht-gesetzten Druckmassen, der ermittelten Position des Druckkopfs und gegebenenfalls weiterer ermittelter Parameter das Schema aktualisieren kann. Ebenfalls kann das Hauptsteuergerät Meldungen über auftretende Fehler und/oder über fehlerhaft nicht-gesetzte Druckmassen erhalten, die entsprechend berücksichtigt werden können.

Durch die direkte Rückmeldung der Position des Druckkopfes an das Hauptsteuergerät ist es möglich, dass das Hauptsteuergerät direkten Einfluss auf die Verfahrwege des Druckkopfes nehmen kann. So ist es beispielsweise möglich, den Druckkopf außerhalb des Objekts zu beschleunigen und abzubremsen, so dass sich der Druckkopf während des eigentlichen Druckvorganges, bei dem Druckmassen gesetzt werden, mit konstanter Geschwindigkeit relativ zum Objekt bewegt. Insbesondere bei hohen Geschwindigkeiten können so Resonanzen sowie Schwingungen vermieden bzw. reduziert werden, was zu einer höheren Qualität des Objekts führt. Die Beschleunigung außerhalb des Objekts führt zu kürzeren Totzeiten bei Leerfahrten, was die für den Druck benötigte Zeit reduziert und damit wiederrum die Druckkosten pro Objekt senkt.

Werden Druckmassen eingesetzt, die unter UV/VIS-Einwirkung aushärten, so weist die 3D-Druckvorrichtung bevorzugt eine UV/VIS-Quelle auf. Bei ortsselektiver Belichtung ist die UV/VIS-Quelle relativ zur Basisplatte beweglich angeordnet und beleuchtet nur ausgewählte Bereiche des Objekts. Bei einer flächigen Belichtung ist die UV/VIS-Quelle in einer Variante derart ausgestaltet, dass das gesamte Objekt bzw. eine gesamte Materialschicht des Objekts auf einmal belichtet wird. In einer bevorzugten Variante ist die UV/VIS-Quelle derart ausgebildet, ihre Lichtstärke oder ihre Energie variabel eingestellt werden kann und dass die UV/VIS-Quelle zur gleichen Zeit nur einen Teilbereich des Objekts belichtet, wobei die UV/VIS-Quelle derart relativ zu dem Objekt bewegt werden kann, dass das gesamte Objekt mit dem UV/VIS-Licht, ggf. in unterschiedlicher Intensität, belichtet werden kann. Beispielsweise ist die UV/VIS-Quelle hierzu als UV/VIS-LED Leiste ausgestaltet und wird relativ zu dem Objekt, bzw. über das gedruckte Objekt bewegt.

Bevorzugt umfasst die 3D-Druckvorrichtung außerdem eine Reinigungsstation, welche die automatische Reinigung der Austragevorrichtung des Druckkopfs ermöglicht. Aufgrund der laufenden Ermittlung der Position des Druckkopfes kann eine Reinigung auch während der Herstellung eines Objekts vorgenommen werden. Dazu wird der Druck unterbrochen und der Druckkopf zur Reinigungsstation bewegt. Nach Durchführung des Reinigungsvorgangs wird der Druckkopf präzise zur nächsten Position geführt, an der eine Druckmasse gesetzt werden soll und der Druckvorgang wird fortgesetzt.

## Kurzbeschreibung der Figuren

In den Figuren sind Ausführungsbeispiele der Erfindung dargestellt, wobei die Figuren den Gegenstand der Erfindung nur schematisch darstellen. Die dargestellten und im Folgenden mit Bezug zu den Figuren beschriebenen Ausführungsbeispiele sind für den Gegenstand der Erfindung nicht als einschränkend aufzufassen. Dem Fachmann wird eine Vielzahl von Abwandlungen ersichtlich sein, welche im Rahmen der Patentansprüche möglich sind.

Es zeigen

Figur 1 eine schematische Darstellung eines Ausführungsbeispiels eines Verfahrens zum Ansteuern einer Austragevorrichtung,

Figur 2 einen schematischen Aufbau einer 3D-Druckvorrichtung gemäß einer Ausführungsform der Erfindung,

Figur 3 eine Seitenansicht eines Strangaustrags und einer Strangvermessung gemäß einer Ausführungsform der Erfindung,

Figur 4 eine Draufsicht auf die Strangvermessung gemäß Figur 3,

Figur 5 eine Seitenansicht einer Tropfenvermessung gemäß einer Ausführungsform der Erfindung,

Figur 6 eine Seitenansicht eines Druckkopfes und einer an einer Halterung angeordneten optischen Messeinrichtung gemäß einer Ausführungsform der Erfindung,

Figur 7 eine Seitenansicht eines Druckkopfes mit einem Sender und einem Empfänger gemäß einer Ausführungsform der Erfindung und

Figur 8 eine Seitenansicht eines Druckkopfes mit einer Sende-/ Empfangseinheit gemäß einer Ausführungsform der Erfindung.

**Detaillierte Beschreibung der Figuren**

In der nachfolgenden Beschreibung der Ausführungsbeispiele der Erfindung werden gleiche oder ähnliche Komponenten und Elemente mit gleichen oder ähnlichen Bezugszeichen bezeichnet, wobei auf eine wiederholte Beschreibung dieser Komponenten oder Elemente in Einzelfällen verzichtet wird.

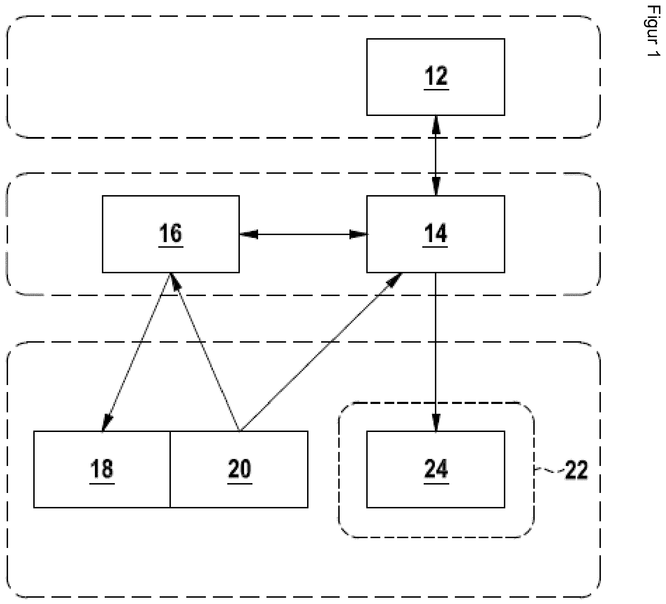

In Figur 1 ist der Ablauf eines Ausführungsbeispiels des erfindungsgemäßen Verfahrens schematisch dargestellt. Eine Vorlage für ein herzustellendes Objekt ist in dem Hauptsteuergerät 12 hinterlegt. Das Hauptsteuergerät 12 ermittelt hieraus ein Schema, welches beschreibt, an welchen Orten Druckmassen zur Herstellung des Objekts gesetzt werden müssen. Diese Orte stellen Soll-Positionen dar. Diese Soll-Positionen werden an eine Steuereinrichtung 14 übermittelt. Die Steuereinrichtung 14 steht mit einer Maschinensteuerung 16 in Verbindung. Mittels der Maschinensteuerung 16 wird eine Positioniereinrichtung 18 angesteuert, um einen Druckkopf 22 zu der Soll-Position zu bewegen. Alternativ kann die Maschinensteuerung 16 eine direkte Verbindung mit dem Hauptsteuergerät 12 aufweisen (nicht dargestellt).

Die Bewegung des Druckkopfs 22 wird über eine Positionsmesseinrichtung 20 überwacht. Die Positionsmesseinrichtung 20 und die Positioniereinrichtung 18 bzw. der Druckkopf 22 sind derart miteinander gekoppelt, insbesondere durch eine mechanische Verbindung, dass jede Positionsänderung des Druckkopfs 22 durch die Positionsmesseinrichtung 20 ermittelt wird. Die Positionsmesseinrichtung 20 meldet die ermittelte Position des Druckkopfs 22 zurück an die Steuereinrichtung 14.

Der Druckkopf 22 umfasst eine Austragevorrichtung 24, die eingerichtet ist, Druckmassen zum Aufbau des Objekts zu setzen. Die Steuereinrichtung 14 steht mit der Austragevorrichtung 24 in Verbindung und steuert den Austrag der Druckmassen. Dabei ist vorgesehen, dass die Steuereinrichtung 14 die Austragevorrichtung 24 in Abhängigkeit von der über die Positionsmesseinrichtung 20 laufend ermittelten Position des Druckkopfs 22 ansteuert. Somit werden Druckmassen unter Berücksichtigung der tatsächlich ermittelten Ist-Position gesetzt und nicht etwa unter der Annahme, dass sich der Druckkopf 22 an der Soll-Position befindet.

Außerdem kann vorgesehen sein, dass ermittelte Positionen des Druckkopfs 22 durch die Steuereinrichtung 14 über eine bidirektionale Verbindung an die Hauptsteuerung 12 zurückgemeldet werden. Die Hauptsteuerung 12 wird dadurch in die Lage versetzt, das weitere Setzen der Druckmassen in Abhängigkeit der ermittelten Positionen zu planen, an denen bereits Druckmassen gesetzt wurden.

Ferner kann wie dargestellt vorgesehen sein, dass die Positionsmesseinrichtung 20 die laufend ermittelte Position des Druckkopfs 22 zusätzlich an die Maschinensteuerung 16 übermittelt. Diese kann durch diese Rückmeldung in einer Variante des Verfahrens eine Fehlermeldung generieren und an die Steuereinrichtung 14 übermitteln, falls eine Soll-Position durch den Druckkopf 22 nicht erreicht werden konnte. Ebenfalls ist es möglich, einen Regelkreis zu implementieren, um die Positioniereinrichtung 18 derart anzusteuern, dass die Abweichung der von der Positionsmesseinrichtung 20 ermittelten Position des Druckkopfs 22 von der Soll-Position minimiert wird. Hierzu kann die Ist-Position des Druckkopfs 22 über die Positioniereinrichtung 18 laufend der Soll-Position nachgeführt werden, was im Rahmen der vorliegenden Offenbarung auch als Nachjustierung zur Einnahme einer exakten Position bezeichnet wird.

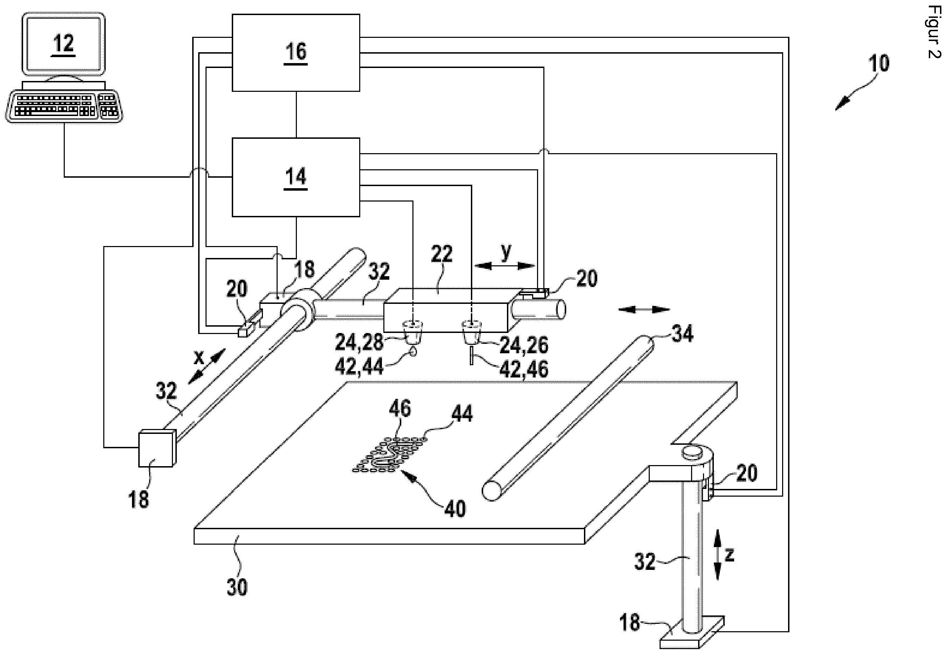

In Figur 2 ist eine 3D-Druckvorrichtung 10 schematisch dargestellt. Die 3D-Druckvorrichtung 10 umfasst die Hauptsteuerung 12, die die Vorlage für ein herzustellendes Objekt 40 enthält und mit der Steuereinrichtung 14 in Verbindung steht. Die 3D-Druckvorrichtung 10 umfasst ferner eine Basisplatte 30, auf der das Objekt 40 generativ durch das Setzen von Druckmassen 42 aufgebaut wird.

Zum Setzen der Druckmassen 42 umfasst der Druckkopf 22 in dem dargestellten Ausführungsbeispiel zwei Austragevorrichtungen 24. Eine Austragevorrichtung 24 ist als Jettingdüse 28 ausgeführt. Die Jettingdüse 28 setzt die Druckmassen 42 in Form von einzelnen Tropfen oder Voxel 44. Die andere Austragevorrichtung 24 ist als Dispenser 26 ausgestaltet und setzt die Druckmassen 42 in Form von Strängen 46.

In dem in der Figur 2 dargestellten Beispiel werden sowohl die Jettingdüse 28 als auch der Dispenser 26 zum generativen Aufbau des Objekts 40 eingesetzt, wobei mit Hilfe der Jettingdüse 28 Voxel 44 gesetzt werden, die die Oberfläche des Objekts 40 bilden und mit dem Dispenser 26 Stränge 46 gesetzt werden, um rasch das Innere des Objekts 40 aufzufüllen.

Wird Druckmasse 42 eingesetzt, die durch Einwirkung von UV/VIS-Strahlung aushärtet, so ist bevorzugt eine UV/VIS-Lichtquelle vorgesehen. In der Ausführungsform der Figur 2 ist hierzu eine LED-Leiste 34 vorgesehen, die UV/VIS-Licht ortsselektiv emittiert. Um die Fläche der Basisplatte 30 mit UV/VIS-Licht überstreichen zu können, ist die LED-Leiste 34 beweglich ausgeführt. Bei wärmeaushärtenden Druckmassen 42, wird alternativ bevorzugt eine IR-Lichtquelle vorgesehen, die eingerichtet ist, ortselektiv die Druckmassen 42 zu erwärmen. Dazu kann die IR-Lichtquelle insbesondere am Druckkopf 22 befestigt werden. Alternativ kann zur Aushärtung ein beheizbarer Raum eingesetzt werden.

Zur Positionierung des Druckkopfs 22, also relativ zur Basisplatte 30, umfasst die 3D-Druckvorrichtung 10 ferner drei Positioniereinrichtungen 18, wobei jede dieser Positioniereinrichtungen 18 eine Bewegung in jeweils eine der drei Raumachsen X, Y und Z ermöglicht. Jede der Positioniereinrichtungen 18 ist hierzu mit einer Achse 32 verbunden, entlang der eine Bewegung ermöglicht wird. Im in der Figur 2 dargestellten Ausführungsbeispiel ist hierzu eine der Positioniereinrichtungen 18 der Basisplatte 30 zugeordnet und ermöglicht eine Verschiebung der Basisplatte 30 entlang der mit "Z" bezeichneten Raumrichtung. Zwei weitere Positioniereinrichtungen 18 sind dem Druckkopf 22 zugeordnet und ermöglichen dem Druckkopf 22 Bewegungen entlang den mit "X" und "Y" bezeichneten Raumrichtungen. Alle drei Positioniereinrichtungen 18 zusammen ermöglichen es, den Druckkopf 22 entlang jeder der drei Raumrichtungen relativ zu der Basisplatte 30 zu positionieren. Die Positioniereinrichtungen 18 werden von der Maschinensteuerung 16 angesteuert, die wiederum mit der Steuereinrichtung 14 kommuniziert.

Zum Ermitteln der Position des Druckkopfs 22 umfasst die 3D-Druckvorrichtung 10 drei Positionsmesseinrichtungen 20. Die Positionsmesseinrichtungen 20 sind jeweils einer der drei Raumrichtungen X, Y und Z zugeordnet und erfassen die Bewegung des Druckkopfs 22 bzw. der Basisplatte 30, so dass die relative Position des Druckkopfes 22 zur Basisplatte 30 laufend ermittelt wird. Die Positionsmesseinrichtungen 20 stehen mit der Steuereinrichtung 14 in Verbindung. Zusätzlich kann eine Verbindung zu der Maschinensteuerung 16 vorgesehen sein.

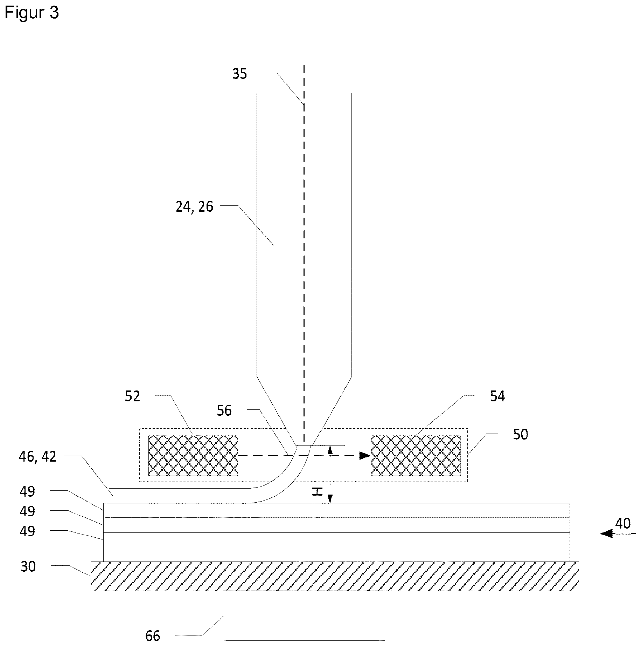

Figur 3 zeigt eine Seitenansicht eines Strangaustrags und einer Strangvermessung gemäß einer Ausführungsform der Erfindung, beispielsweise unter Einsatz der mit Bezug zu Figur 2 beschriebenen 3D-Druckvorrichtung 10.

Die Austragevorrichtung 24 umfasst hier beispielhaft den Dispenser 26. Der Dispenser 26 legt die Druckmasse 42 in Form von Strängen 46 auf der Basisplatte 30 ab. Die abgelegten Stränge 46 ergeben Schichten 49, welche das Objekt 40 bilden. Der Dispenser 26 ist in einer Austragehöhe H über dem Objekt 40 angeordnet, die nach Fertigstellung einer Schicht 49 wieder neu eingestellt wird.

Dargestellt ist weiterhin eine erfindungsgemäße optischer Messeinrichtung 50, die hier als Lichtschranke ausgebildet ist. Die optische Messeinrichtung 50 umfasst einen Sender 52 und einen Empfänger 54, welche einander gegenüberliegend angeordnet sind. Vom Sender 52 wird ein Lichtstrahl 56 ausgesendet, den der Empfänger 54 empfängt. Die Messung erfolgt im Durchlichtbetrieb. Vom Empfänger 54 wird das vom Sender 52 emittierte Licht empfangen, welches durch Absorption und Reflexion an der Druckmasse 42 um entsprechende Anteile verringert wurde.

Die optische Messeinrichtung 50 ermöglicht eine Messung des austretenden Strangs 46 im Bereich der Austragevorrichtung 24. Der Lichtstrahl 56 ist hierzu im Wesentlichen senkrecht zu einer Austrageachse 35 der Austragevorrichtung 24 positioniert. Durch die senkrechte Anordnung des Lichtstrahls 56 kann der Querschnitt des ausgetretenen Strangs 46 im Bereich der Austragevorrichtung 24 geometrisch vermessen werden.

Schematisch dargestellt ist außerdem ein der Basisplatte 30 zugeordneter Gewichtssensor 66. Die Gewichtsmessung erfolgt elektronisch an Auflagepunkten der Basisplatte 30. Durch den Gewichtssensor 66 kann die Zunahme an Masse des gedruckten Objekts 40 laufend ermittelt und aufgezeichnet werden.

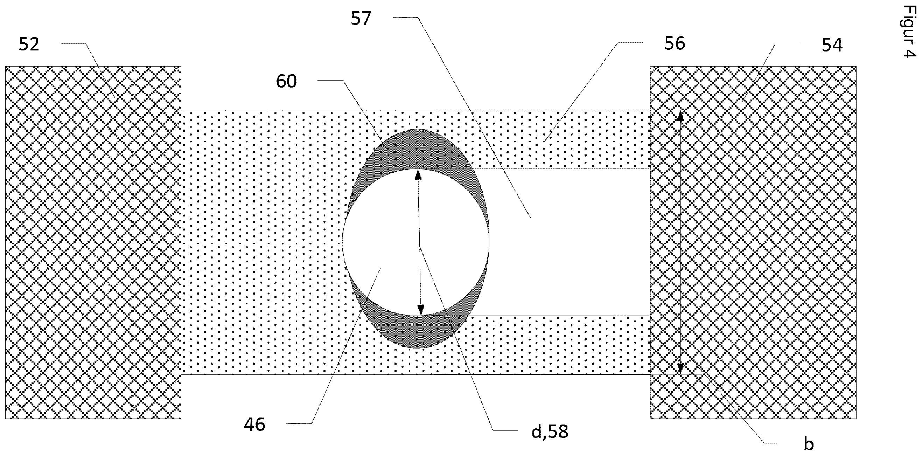

In Figur 4 ist eine Draufsicht auf die Strangvermessung gemäß Figur 3.

Vom Sender 52 wird der Lichtstrahl 56 ausgesendet und vom Empfänger 54 empfangen. Durch den im Lichtstrahl 56 befindlichen Strang 46 entsteht hinter diesem ein Schatten 57. Die Größe des Schattens 57 ist dabei abhängig von der Geometrie des Strangs 46, genauer gesagt in dem dargestellten Ausführungsbeispiel von einer Querschnittfläche des Strangs 46. Dargestellt sind zwei Querschnitte von Strängen 46, nämlich ein optimal zylinderförmiger Strangquerschnitt 58 und ein deformierter Strangquerschnitt 60. Durch die Bewegung des Druckkopfes 22 beim Druck deformiert sich der Strang 46, was z. B. in Figur 3 erkennbar ist. Die Deformation des Strangs 46 ergibt sich aber auch bei einer zu niedrigen Austragehöhe H. Durch die Messung des Schattens 57 bzw. der eingefallenen Lichtmenge am Empfänger 54 kann festgestellt werden, ob die Deformation ein tolerierbares Ausmaß hat oder nicht. Erfindungsgemäß wird dies ggf. korrigiert, z. B. durch Erhöhung der Austragehöhe H oder durch Verlangsamung der Druckgeschwindigkeit.

Die Breite b des Lichtstrahls 56, mit dem gemessen wird, ist so auf den Strangdurchmesser d abgestimmt, dass entsprechende aussagekräftige Messungen möglich sind.

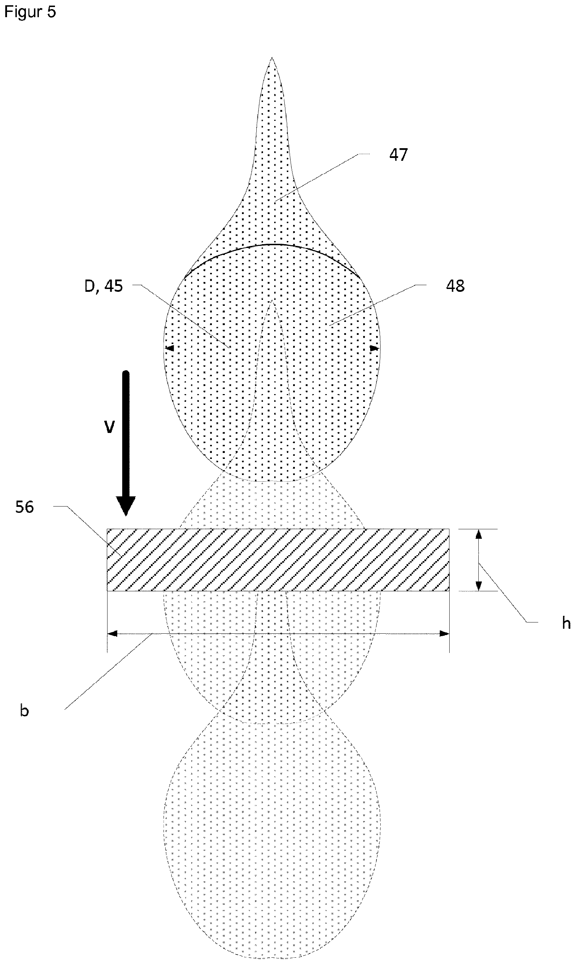

Figur 5 zeigt eine Seitenansicht einer Tropfenvermessung gemäß einer Ausführungsform der Erfindung. Dargestellt ist ein Tropfen 48, welcher beispielsweise von der in Figur 2 dargestellten 3D-Druckvorrichtung 10 ausgetragen wurde. Die Bewegungsrichtung v des Tropfens ist mit einem Pfeil gekennzeichnet. Sie entspricht im Wesentlichen der Austrageachse 35, wobei eine hierzu senkrechte Komponente durch Bewegung des Druckkopfes 22 beim Drucken entsteht.

Der Tropfen 48 umfasst eine Kugelpartie 45 und einen Spitzenpartie 47. Der Kugelpartie 45 wird ein maximaler Durchmesser D zugeordnet. Bei Vorliegen von Fadenzug ist die Spitzenpartie 47 stark verlängert. Der Tropfen 48 durchtritt während des Fluges, d. h. nach dessen Ablösung von der Jettingdüse 28 und vor dessen Austreffen auf der Basisplatte 30 bzw. auf dem bereits gedruckten Teil des Objekts 40, auf welcher der Tropfen 48 einen Voxel 44 bildet, den Lichtstrahl 56.

Der Querschnitt des dargestellten Lichtstrahls 56 wird in der vorliegenden Offenbarung auch als Messfenster bezeichnet. Er weist eine Breite b und eine Höhe h auf, welche auf den maximalen Durchmesser D abgestimmt sind. Im dargestellten Ausführungsbeispiel ist die Breite b des Lichtstrahls 56 etwas größer als der Durchmesser des Tropfens 48 gewählt. Die Höhe h des Lichtstrahls 56 ist in etwa ein Fünftel so groß gewählt wie die Breite b des Lichtstrahls 56. Der dargestellte Lichtstrahl ist daher quasi eindimensional ausgebildet. Dennoch kann am Empfänger die Tropfengeometrie zumindest derart bestimmt werden, dass zur Bestimmung nicht-gesetzter Druckmassen die Existenz von Tropfen 48 im Lichtstrahl 56 festgestellt werden kann und dass Fadenzug festgestellt werden kann. In alternativen Ausführungsformen ist die Höhe h des Lichtstrahls 56 größer gewählt.

Wie aus den Figuren 4 und 5 ersichtlich, kann es vorteilhaft sein, zur Bestimmung des Querschnitts des Tropfen 48 oder des Strangs 46 mehrere Sender 52 und mehrere Empfänger 54 um den Tropfen 48 bzw. Strang 46 herum anzuordnen, beispielsweise je zwei oder drei Sender 52 und Empfänger 54. Hierdurch wird die Abweichung nicht nur in einer Dimension erfassbar, sondern in zwei oder drei Dimensionen, so dass Aussagen zur Rotationssymmetrie des Tropfens 48 oder des Strangs 46 möglich sind. Zur Ermittlung von nicht-gesetzten Druckmassen und Fadenzug sind lediglich ein Sender 52 und ein Empfänger 54 ausreichend, da es lediglich auf die Existenz und Menge von Druckmasse 42 im Lichtstrahl 56 ankommt.

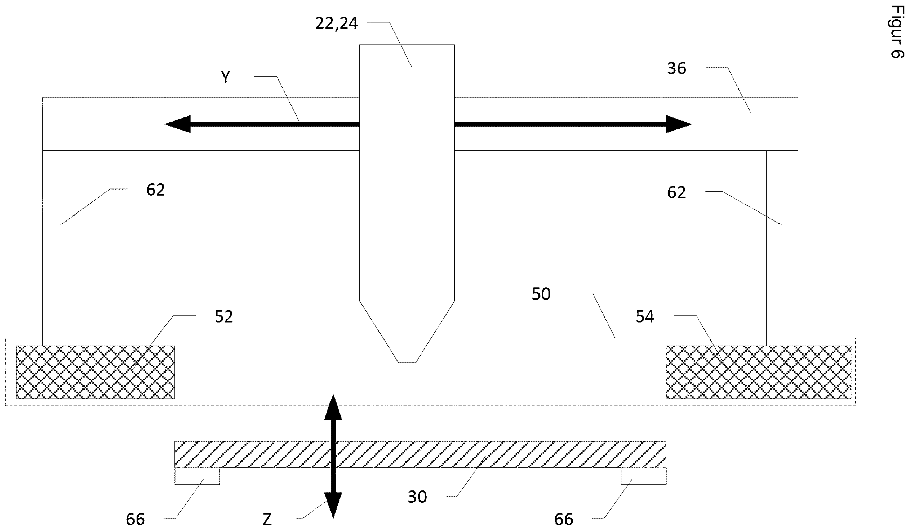

Figur 6 zeigt eine Seitenansicht eines Druckkopfes 22 und einer an einer Halterung 62 angeordneten optischen Messeinrichtung 50 gemäß einer Ausführungsform der Erfindung. Der Druckkopf ist auf einer Verfahrachse 36 beweglich angeordnet. Bei der mit Bezug zu Figur 2 beschriebenen 3D-Druckvorrichtung 10 entspricht die Verfahrachse 36 der dort dargestellten y-Achse 32. Die Basisplatte 30 ist gemäß der Z-Achse unabhängig von dem Druckkopf 22 beweglich.

Die optische Messeinrichtung 50 umfasst wiederum den Sender 52 und den Empfänger 54, die derart positioniert sind, dass sie in der Nähe der Austragevorrichtung 24 ausgetretene Druckmassen 42 vermessen können. Der Sender 52 und der Empfänger 54 sind an Halterungen 62 befestigt, wobei die Halterungen 62 fest mit der Verfahrachse 36 verbunden sind. Bewegt sich also der Druckkopf 22 mitsamt der Verfahrachse 36 entlang einer Achse senkrecht zu der Verfahrachse 36, so werden der Sender 52 und der Empfänger 54 entsprechend mitbewegt.

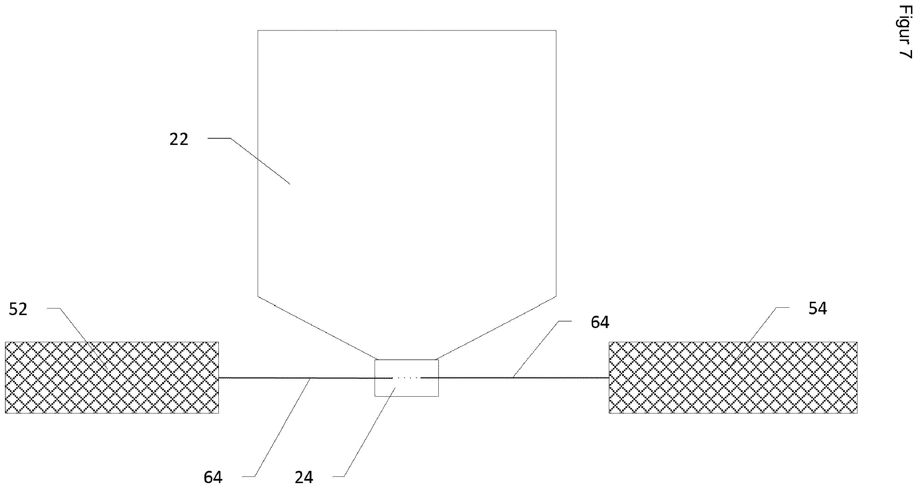

Figur 7 zeigt eine Seitenansicht eines Druckkopfes 22 mit einem Sender 52 und einem Empfänger 54 gemäß einer Ausführungsform der Erfindung. Der Sender 52 und der Empfänger 54 sind jeweils mittels eines Lichtwellenleiters 64 an die Austragevorrichtung 24 herangeführt. Die Messung findet im Durchlichtbetrieb statt. Diese Ausführungsform hat gegenüber der mit Bezug zu Figur 6 beschriebenen Ausführungsform den Vorteil, dass der Sender 52 und der Empfänger 54 im Prinzip beliebig an der 3D-Druckvorrichtung 10 positioniert werden können und bei der Bewegung des Druckkopfs 22 nicht zwangsläufig mitgeführt werden müssen. Die Lichtaustrittsfläche des Lichtwellenleiters 64 befindet sich dabei unmittelbar in der Nähe der Austrageöffnung der Austragevorrichtung 24, beispielsweise ist sie entweder in den Tropfen- bzw. Strangkanal der Austragevorrichtung 24 integriert oder mittels eines Aufsatzes (nicht dargestellt) an der Austragevorrichtung 24 befestigt.

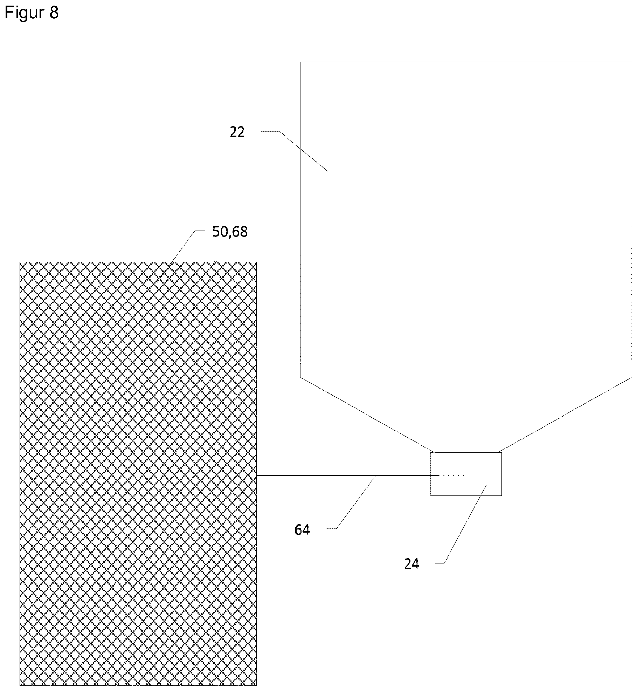

Figur 8 zeigt eine Seitenansicht eines Druckkopfes 22 mit einer Sende-/ Empfangseinheit 68 gemäß einer Ausführungsform der Erfindung. Die optische Messeinrichtung 50 wird hierbei aus der Sende-/ Empfangseinheit 68 gebildet und umfasst einen einzigen Lichtwellenleiter 64, der an die Austragevorrichtung 24 herangeführt ist. Die Messung erfolgt im Reflexlichtbetrieb.

## Patentansprüche

1. Verfahren zur Herstellung eines Objekts (40) unter Einsatz einer 3D-Druckvorrichtung (10), die zumindest einen Druckkopf (22) mit zumindest einer Austragevorrichtung (24) aufweist,
   wobei die Austragevorrichtung (24) dazu eingerichtet ist, Druckmassen (42) an Soll-Positionen zu setzen, um das Objekt (40) generativ zu erzeugen,
   **dadurch gekennzeichnet, dass** aus der Austragevorrichtung (24) austretende Druckmassen (42) und/oder Stütz-

masssen im Bereich der Austragevorrichtung (24) mittels zumindest einer Lichtmengenmessung im Durchlichtbetrieb oder im Reflexlichtbetrieb detektiert und/oder geometrisch vermessen werden, während sie austreten, oder nachdem sie ausgetreten sind und bevor sie gesetzt sind.

2. Verfahren nach Anspruch 1, **dadurch gekennzeichnet, dass** außerdem das Gewicht der aus der Austragevorrichtung (24) ausgetretenen Druckmassen (42) gemessen wird.

3. Verfahren nach einem der vorhergehenden Ansprüche, **dadurch gekennzeichnet, dass** anhand der gemessenen Geometrie und ggf. des gemessenen Gewichts der aus der Austragevorrichtung (24) ausgetretenen Druckmassen (42) Druckfehler ermittelt werden, insbesondere fehlerhaft nicht-gesetzte Druckmassen (42), Fremdkörpereintrag und/oder Fadenzug.

4. Verfahren nach einem der vorhergehenden Ansprüche, **dadurch gekennzeichnet, dass** ermittelte fehlerhaft nicht-gesetzte Druckmassen (42) insbesondere vor einem Aushärteverfahrensschritt nachgedruckt werden.

5. Verfahren nach einem der vorhergehenden Ansprüche, **dadurch gekennzeichnet, dass** auf Basis der gemessenen Geometrie der aus der Austragevorrichtung (24) ausgetretenen Druckmassen (42) eine Reinigung des Druckkopfes (22) ausgelöst und/oder Wartungshinweise abgegeben werden.

6. Verfahren nach einem der vorhergehenden Ansprüche, **dadurch gekennzeichnet, dass** die Geometrie der aus der Austragevorrichtung (24) austretenden Druckmassen (42) mittels eines oder mehrerer Betriebsparameter der 3D-Druckvorrichtung (10) geregelt wird, wobei die Parameter aus folgender Liste ausgewählt sind:

   eine Verfahrgeschwindigkeit des Druckkopfes (22);
   eine Austragehöhe (H) über einer Basisplatte (30), auf welcher das Objekt (40) generativ erzeugt wird;
   ein in der Austragevorrichtung (24) vorherrschender physikalischer Druck, mit dem die Druckmasse (42) beaufschlagt ist;
   ein physikalischer Vordruck im Materialspeicher;
   sowie bei Voxeln eine Druckfrequenz, eine Stößelhubgeschwindigkeit, eine Stößelrückzugsgeschwindikeit, Öffnungszeiten des Jettingventils und der Stößelhub,
   und bei Strängen eine Durchflussrate, eine Zuführergeschwindigkeit und ein Materialrückzugsverhalten bei Zeilenende.

7. Verfahren nach Anspruch 6, **dadurch gekennzeichnet, dass** die Lichtmengenmessung eine Auswertung eines Vergleichs eines über die Zeit empfangenen Signals mit einem Referenzsignal umfasst, wobei das Referenzsignal bei einer Kalibrierung der 3D-Druckvorrichtung (10) oder zu Beginn des Drucks des Objekts (40) oder einer Schicht (49) des Objekts (40) aufgenommen wird.

8. Verfahren nach einem der vorhergehenden Ansprüche, **dadurch gekennzeichnet, dass** das Objekt (40) ein Elastomerteil, insbesondere ein Silikonelastomerteil ist.

9. Verfahren nach einem der vorhergehenden Ansprüche, **dadurch gekennzeichnet, dass** die Position des Druckkopfes (22) durch eine Positionsmesseinrichtung (20) laufend ermittelt wird und die Druckmassen (42) von der Austragevorrichtung (24) in Abhängigkeit von der laufend ermittelten Position des Druckkopfes (22) gesetzt werden.

10. 3D-Druckvorrichtung (10) zur Herstellung eines Objekts (40) im 3D-Druckverfahren, mit zumindest einem Druckkopf (22), der zumindest eine Austragevorrichtung (24) aufweist, wobei die Austragevorrichtung (24) eine Steuereinrichtung (14) aufweist, um Druckmassen (42) an Soll-Positionen zu setzen, um das Objekt (40) generativ zu erzeugen, **dadurch gekennzeichnet, dass** die 3D-Druckvorrichtung (10) zumindest eine optischen Messeinrichtung (50) aufweist, die so angeordnet und ausgerichtet ist, dass im Bereich der Austragevorrichtung (24) aus der Austragevorrichtung (24) austretende Druckmassen (42) mittels zumindest einer Lichtmengenmessung im Durchlichtbetrieb oder im Reflexlichtbetrieb detektiert und/oder geometrisch vermessen werden können, während sie austreten, oder nachdem sie ausgetreten sind und bevor sie gesetzt sind.

11. 3D-Druckvorrichtung (10) nach Anspruch 10, **dadurch gekennzeichnet, dass** die optische Messeinrichtung (50) an einer Verfahrachse (36) des Druckkopfes (22) angeordnet ist.

12. 3D-Druckvorrichtung (10) nach einem der Ansprüche 10 oder 11, **dadurch gekennzeichnet, dass** die optische Messeinrichtung (50) zumindest einen Lichtwellenleiter (64) umfasst, dessen Lichtaustrittsfläche in die Austragevorrichtung (24) integriert oder mittels eines Aufsatzes an der Austragevorrichtung (24) befestigt ist.

**13.** 3D-Druckvorrichtung (10) nach einem der Ansprüche 10 bis 12, mit zumindest einer Basisplatte (30), auf welcher das Objekt (40) generativ erzeugt wird, und einem der Basisplatte (30) zugeordneten Gewichtssensor (66).

**14.** 3D-Druckvorrichtung (10) nach einem der Ansprüche 10 bis 13, wobei die 3D-Druckvorrichtung eine Positionsmesseinrichtung (20) aufweist, mittels welcher die Position des Druckkopfes (22) laufend ermittelbar ist,
wobei die Positionsmesseinrichtung (20) mit der Steuereinrichtung (14) der Austragevorrichtung (24) verbunden ist, und wobei die Austragevorrichtung (24) eingerichtet ist, die Druckmassen (42) in Abhängigkeit von der laufend ermittelten Position des Druckkopfes (22) zu setzen.

## Claims

**1.** Method of producing an object (40) using a 3D printing device (10) having at least one printhead (22) having at least one discharge device (24), wherein the discharge device (24) is set up to place print materials (42) at target positions in order to additively manufacture the object (40), **characterized in that** print materials (42) and/or support materials exiting from the discharge device (24) are detected and/or geometrically measured by means of at least one luminance measurement in transmitted light operation or in reflected light operation in the region of the discharge device (24) while they are exiting or after they have exited and before they have been placed.

**2.** Method according to Claim 1, **characterized in that** the weight of the print materials (42) that have exited from the discharge device (24) is also measured.

**3.** Method according to either of the preceding claims, **characterized in that** the measured geometry and if appropriate the measured weight of the print materials (42) that have exited from the discharge device (24) are used to detect print errors, especially erroneously unplaced print materials (42), ingress of foreign bodies and/or stringing.

**4.** Method according to any of the preceding claims, **characterized in that** erroneously unplaced print materials (42) detected are reprinted especially prior to a method step of curing.

**5.** Method according to any of the preceding claims, **characterized in that**, on the basis of the measured geometry of the print materials (42) that have exited from the discharge device (24), cleaning of the printhead (22) is triggered and/or maintenance advice is issued.

**6.** Method according to any of the preceding claims, **characterized in that** the geometry of the print materials (42) exiting from the discharge device (24) is under closed-loop control by means of one or more operating parameters of the 3D printing device (10), said parameters being selected from the following list:

a movement speed of the printhead (22);
a discharge height (H) above a baseplate (30) on which the object (40) is additively manufactured;
a physical pressure that prevails in the discharge device (24), to which the print material (42) is subject;
a physical supply pressure in the material reservoir;
and, in the case of voxels, a print frequency, a ram advance speed, a ram withdrawal speed, opening times of the jetting valve, and the ram stroke, and, in the case of strands, a flow rate, a feeder speed and a material retraction characteristic at the end of a line.

**7.** Method according to Claim 6, **characterized in that** the luminance measurement comprises an evaluation of a comparison of a signal received over time with a reference signal, where the reference signal is recorded in a calibration of the 3D printing device (10) or at the start of the printing of the object (40) or of a layer (49) of the object (40).

**8.** Method according to any of the preceding claims, **characterized in that** the object (40) is an elastomer part, especially a silicone elastomer part.

**9.** Method according to any of the preceding claims, **characterized in that** the position of the printhead (22) is constantly determined by a position measurement unit (20) and the print materials (42) are placed by the discharge device (24) depending on the constantly determined position of the printhead (22).

EP 3 359 372 B1

**10.** 3D printing device (10) for manufacture of an object (40) by the 3D printing method, having at least one printhead (22) having at least one discharge device (24), where the discharge device (24) has a control unit (14) in order to place print materials (42) at target positions in order to additively manufacture the object (40), **characterized in that** the 3D printing device (10) has at least one optical measurement unit (50) arranged and set up such that print materials (42) exiting from the discharge device (24) can be detected and/or geometrically measured by means of at least one luminance measurement in transmitted light operation or in reflected light operation in the region of the discharge device (24) while they are exiting or after they have exited and before they have been placed.

**11.** 3D printing device (10) according to Claim 10, **characterized in that** the optical measurement unit (50) is arranged in an axis of movement (36) of the printhead (22).

**12.** 3D printing device (10) according to either of Claims 10 and 11, **characterized in that** the optical measurement unit (50) comprises at least one optical fiber (64), the light exit area of which is integrated into the discharge device (24) or is secured on the discharge device (24) by means of an attachment.

**13.** 3D printing device (10) according to any of Claims 10 to 12, having at least one baseplate (30) on which the object (40) is additively manufactured, and a weight sensor (66) assigned to the baseplate (30) .

**14.** 3D printing device (10) as claimed in any of Claims 10 to 13, wherein the 3D printing device has a position measurement unit (20) by means of which the position of the printhead (22) can be determined constantly, wherein the position measurement unit (20) is connected to the control unit (14) of the discharge device (24), and wherein the discharge device (24) is set up to place the print materials (42) as a function of the constantly determined position of the printhead (22) .

**Revendications**

**1.** Procédé de fabrication d'un objet (40) en utilisant un dispositif d'impression 3D (10), lequel possède au moins une tête d'impression (22) pourvue d'au moins un dispositif de décharge (24), le dispositif de décharge (24) étant conçu pour poser des masses d'impression (42) à des positions voulues afin de produire l'objet (40) de manière générative, **caractérisé en ce que** des masses d'impression (42) déchargées du dispositif de décharge (24) et/ou des masses support dans la zone du dispositif de décharge (24) sont détectées et/ou mesurées géométriquement au moyen d'au moins une mesure de quantité de lumière en mode de lumière transmise ou en mode de lumière réfléchie pendant qu'elles sont déchargées ou après avoir été déchargées et avant qu'elles soient posées.

**2.** Procédé selon la revendication 1, **caractérisé en ce que** le poids des masses d'impression (42) déchargées du dispositif de décharge (24) est en outre mesuré.

**3.** Procédé selon l'une des revendications précédentes, **caractérisé en ce que** des défauts d'impression, notamment des masses d'impression (42) non déposées par erreur, l'inclusion de corps étrangers et/ou un filage sont déterminés à l'aide de la géométrie mesurée et éventuellement du poids mesuré des masses d'impression (42) déchargées du dispositif de décharge (24).

**4.** Procédé selon l'une des revendications précédentes, **caractérisé en ce que** des masses d'impression (42) non déposées par erreur déterminées sont réimprimées notamment avant une étape de procédé de durcissement.

**5.** Procédé selon l'une des revendications précédentes, **caractérisé en ce qu'**un nettoyage de la tête d'impression (22) est déclenché et/ou des notifications d'alerte sont délivrées sur la base de la géométrie mesurée des masses d'impression (42) déchargées du dispositif de décharge (24).

**6.** Procédé selon l'une des revendications précédentes, **caractérisé en ce que** la géométrie des masses d'impression (42) déchargées du dispositif de décharge (24) est régulée au moyen d'un ou plusieurs paramètres de fonctionnement du dispositif d'impression 3D (10), les paramètres étant sélectionnés dans la liste suivante :

une vitesse de déplacement de la tête d'impression (22) ;
une hauteur de décharge (H) au-dessus d'une plaque de base (30) à laquelle l'objet (40) est produit de manière générative ;

une pression physique qui règne dans le dispositif de décharge (24), à laquelle est soumise la masse d'impression (42) ;

une pression d'admission physique dans la réserve de matière ;

ainsi que pour les voxels, une fréquence d'impression, une vitesse de course de coulisseau, une vitesse de retrait de coulisseau, des temps d'ouverture de la vanne de production de jet et la course du coulisseau, et pour les lignes, un débit, une vitesse de dispositif d'acheminement et un comportement de recul de matière en fin de ligne.

7. Procédé selon la revendication 6, **caractérisé en ce que** la mesure de la quantité de lumière comprend une interprétation d'une comparaison d'un signal reçu dans le temps avec un signal de référence, le signal de référence étant enregistré lors d'un étalonnage du dispositif d'impression 3D (10) ou au début de l'impression de l'objet (40) ou d'une couche (49) de l'objet (40).

8. Procédé selon l'une des revendications précédentes, **caractérisé en ce que** l'objet (40) est une pièce en élastomère, notamment une pièce en élastomère à base de silicone.

9. Procédé selon l'une des revendications précédentes, **caractérisé en ce que** la position de la tête d'impression (22) est déterminée continuellement par un appareil de mesure de position (20) et les masses d'impression (42) du dispositif de décharge (24) sont posées en fonction de la position déterminée continuellement de la tête d'impression (22).

10. Dispositif d'impression 3D (10) destiné à fabriquer un objet (40) dans un procédé d'impression 3D, comprenant au moins une tête d'impression (22), laquelle possède au moins un dispositif de décharge (24), le dispositif de décharge (24) possédant un appareil de commande (14) afin de poser des masses d'impression (42) à des positions voulues en vue de produire l'objet (40) de manière générative,
**caractérisé en ce que** le dispositif d'impression 3D (10) possède au moins un appareil de mesure optique (50) qui est disposé et orienté de telle sorte que dans la zone du dispositif de décharge (24), des masses d'impression (42) déchargées du dispositif de décharge (24) sont détectées et/ou mesurées géométriquement au moyen d'au moins une mesure de quantité de lumière en mode de lumière transmise ou en mode de lumière réfléchie pendant qu'elles sont déchargées ou après avoir été déchargées et avant qu'elles soient posées.

11. Dispositif d'impression 3D (10) selon la revendication 10, **caractérisé en ce que** l'appareil de mesure optique (50) est disposé au niveau d'un axe de déplacement (36) de la tête d'impression (22).

12. Dispositif d'impression 3D (10) selon l'une des revendications 10 ou 11, **caractérisé en ce que** l'appareil de mesure optique (50) comporte au moins une fibre optique (64) dont la surface de sortie de lumière est intégrée dans le dispositif de décharge (24) ou est fixée au dispositif de décharge (24) au moyen d'un adaptateur.

13. Dispositif d'impression 3D (10) selon l'une des revendications 10 à 12, comprenant au moins une plaque de base (30) sur laquelle l'objet (40) est produit de manière générative et un capteur de poids (66) associé à la plaque de base (30).

14. Dispositif d'impression 3D (10) selon l'une des revendications 10 à 13, le dispositif d'impression 3D possédant un appareil de mesure de position (20) au moyen duquel peut être déterminée continuellement la position de la tête d'impression (22),
l'appareil de mesure de position (20) étant relié à l'appareil de commande (14) du dispositif de décharge (24),
et le dispositif de décharge (24) étant conçu pour poser les masses d'impression (42) en fonction de la position déterminée continuellement de la tête d'impression (22).

Figur 1

Figur 2

Figur 3

Figur 4

Figur 5

Figur 6

Figur 7

Figur 8

**EP 3 359 372 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011106614 A1
- DE 102012000664 A1
- EP 1886793 A1
- DE 102013003167 A1
- DE 102015110342 A1
- WO 20157044372 A1
- US 9079441 B1
- DE 102008000156 A1
- DE 102008043316 A1
- DE 102009002231 A1
- DE 102009027486 A1
- DE 102010043149 A1
- WO 2009027133 A2
- EP 0122008 A1
- EP 0561919 B1
- EP 0398701 B1
- EP 0146307 B1
- EP 0358452 B1
- EP 0561893 B1
- EP 1050538 B1
- EP 1803728 B1
- DE 102011108799 A1